# EUROPEAN PATENT APPLICATION

(11) **EP 3 300 375 A1**
(43) Date of publication of application: **28.03.2018**
(21) Application number: 16796753.8
(22) Date of filing: 17.05.2016
(51) Int. Cl.: H04N 21/2362, H04N 21/236, H04N 13/00, H04N 21/81

(54) **BROADCAST SIGNAL TRANSMITTING APPARATUS, BROADCAST SIGNAL RECEIVING APPARATUS, BROADCAST SIGNAL TRANSMITTING METHOD, AND BROADCAST SIGNAL RECEIVING METHOD**

(30) Priority: 18.05.2015 US 201562163362 P; 02.06.2015 US 201562170093 P
(71) Applicant: LG Electronics Inc., Yeongdeungpo-gu Seoul 07336 (KR)
(72) Inventor: HWANG, Soojin, Seoul 06772 (KR); SUH, Jongyeul, Seoul 06772 (KR); OH, Sejin, Seoul 06772 (KR)
(74) Representative: Frenkel, Matthias Alexander
(86) International application number: PCT/KR2016/005196
(87) International publication number: WO 2016/186426

(57) **Abstract**

Suggested is a method for transmitting a broadcast signal. A method for transmitting a broadcast signal according to the present invention suggests a system which can support a next-generation broadcasting service in an environment that supports a next-generation hybrid broadcast using a terrestrial broadcast network and an Internet network. In addition, suggested is an effective signaling method which is capable of encompassing a terrestrial broadcast network and an Internet network in an environment that supports a next-generation hybrid broadcast.

## Description

### [Technical Field]

The present invention relates to an apparatus for transmitting a broadcast signal, an apparatus for receiving a broadcast signal and methods for transmitting and receiving a broadcast signal.

### [Background Art]

As analog broadcast signal transmission comes to an end, various technologies for transmitting/receiving digital broadcast signals are being developed. A digital broadcast signal may include a larger amount of video/audio data than an analog broadcast signal and further include various types of additional data in addition to the video/audio data.

### [Disclosure]

### [Technical Problem]

That is, a digital broadcast system can provide HD (high definition) images, multichannel audio and various additional services. However, data transmission efficiency for transmission of large amounts of data, robustness of transmission/reception networks and network flexibility in consideration of mobile reception equipment need to be improved for digital broadcast.

### [Technical Solution]

The object of the present invention can be achieved by providing a system for effectively supporting a next-generation broadcast signal in an environment for supporting next-generation hybrid broadcast using a terrestrial broadcast network and the Internet and a related signaling method.

### [Advantageous Effects]

The present invention proposes a method of defining disparity information of 3D information in a media file and storing and transmitting the information.

The method according to the present invention may effectively store and transmit disparity information of 3D content. The present invention proposes an effective signaling method when disparity information of 3D content of a video sample is changed in units of video samples or track fragments. The present invention proposes an effective signaling method for each level of disparity information of 3D content. The method according to the present invention may provide excellent compatibility in various storage and transmission systems using a corresponding media file format.

### [Description of Drawings]

The accompanying drawings, which are included to provide a further understanding of the invention, illustrate embodiments of the invention and together with the description serve to explain the principle of the invention.

In the drawings:
FIG. 1 is a diagram showing a protocol stack according to an embodiment of the present invention;
FIG. 2 is a diagram showing a service discovery procedure according to one embodiment of the present invention;
FIG. 3 is a diagram showing a low level signaling (LLS) table and a service list table (SLT) according to one embodiment of the present invention;
FIG. 4 is a diagram showing a USBD and an S-TSID delivered through ROUTE according to one embodiment of the present invention;
FIG. 5 is a diagram showing a USBD delivered through MMT according to one embodiment of the present invention;
FIG. 6 is a diagram showing link layer operation according to one embodiment of the present invention;
FIG. 7 is a diagram showing a link mapping table (LMT) according to one embodiment of the present invention;
FIG. 8 is a diagram showing a structure of a broadcast signal transmission device of a next-generation broadcast service according to an embodiment of the present invention;
FIG. 9 is a diagram showing a writing operation of a time interleaver according to an embodiment of the present invention;
FIG. 10 is a block diagram of an interleaving address generator including a main-PRBS generator and a sub-PRBS generator according to each FFT mode, included in the frequency interleaver, according to an embodiment of the present invention;
FIG. 11 is a block diagram illustrating a hybrid broadcast reception apparatus according to an embodiment of the present invention;
FIG. 12 is a diagram showing an overall operation of a DASH-based adaptive streaming model according to an embodiment of the present invention;
FIG. 13 is a block diagram of a receiver according to an embodiment of the present invention;
FIG. 14 is a diagram showing a configuration of a media file according to an embodiment of the present invention;
FIG. 15 is a diagram showing a disparity configuration box for providing disparity information of 3D content according to an embodiment of the present invention;
FIG. 16 is a diagram showing a disparity configuration box for providing disparity information of 3D content according to another embodiment of the present invention;
FIG. 17 is a diagram showing a method of defining disparity information in a tkhd box according to an embodiment of the present invention;
FIG. 18 is a diagram showing a method of adding disparity configuration box including disparity related information to a track header box according to an embodiment of the present invention;
FIG. 19 is a diagram showing a method of defining disparity information in a video media header (vmhd) box according to an embodiment of the present invention;
FIG. 20 is a diagram showing a method of defining disparity information in a trex box according to an embodiment of the present invention;
FIG. 21 is a diagram showing a method of defining disparity information in a track fragment header (tfhd) box according to an embodiment of the present invention;
FIG. 22 is a diagram showing a method of defining disparity information in track run (trun) box according to an embodiment of the present invention;
FIG. 23 is a diagram showing a method of defining disparity information in a track run (trun) box according to another embodiment of the present invention;
FIG. 24 is a diagram showing a method of defining disparity information in various flags or sample group entries according to an embodiment of the present invention;
FIG. 25 is a diagram showing a method of defining disparity information in a visual sample entry according to an embodiment of the present invention;
FIG. 26 is a diagram showing a method of defining disparity information in an HEVC sample entry, an HEVC configuration box, or an HEVC decoder configuration record according to an embodiment of the present invention;
FIG. 27 is a diagram showing a method of defining a disparity information SEI box and storing/transmitting disparity information according to an embodiment of the present invention;
FIG. 28 is a diagram showing an operation of a media engine of a receiver based on disparity information processing capability according to an embodiment of the present invention;
FIG. 29 is a diagram showing a dynamic adaptive streaming over HTTP (DASH) data model according to an embodiment of the present invention;
FIG. 30 is a diagram showing explanation of disparity configuration description according to an embodiment of the present invention;
FIG. 31 is a diagram showing explanation of @schemeIdUri and @value of a disparityConfiguration1 element according to an embodiment of the present invention;
FIG. 32 is a diagram showing description of @value of a disparityConfiguration1 element according to an embodiment of the present invention;
FIG. 33 shows description of @schemeIdUri and @value of a disparityConfiguration1 element according to another embodiment of the present invention;
FIG. 34 is a diagram showing disparity configuration of a plurality of regions according to an embodiment of the present invention;
FIG. 35 is a diagram showing explanation of @value of an MRDConfiguration element according to an embodiment of the present invention;
FIG. 36 shows disparity configuration description according to another embodiment of the present invention;
FIG. 37 is a diagram showing disparity configuration description according to another embodiment of the present invention;
FIG. 38 is a diagram showing a disparity set configuration element according to another embodiment of the present invention;
FIG. 39 is a diagram showing common attributes and elements including disparity information according to an embodiment of the present invention;
FIG. 40 is a diagram showing a method of transmitting disparity information using essential property (EssentialProperty) or supplementary property (SupplementaryProperty) descriptor according to an embodiment of the present invention;
FIG. 41 is a diagram showing the case in which disparity configuration of a plurality of regions is used alone according to an embodiment of the present invention;
FIG. 42 is a diagram showing a content component element including disparity information according to an embodiment of the present invention;
FIG. 43 is a diagram showing a segment base element including disparity information according to an embodiment of the present invention;
FIG. 44 shows an adaptation set element including disparity information according to an embodiment of the present invention;
FIG. 45 shows a representation element including disparity information according to an embodiment of the present invention;
FIG. 46 shows a representation element including disparity information according to an embodiment of the present invention;
FIG. 47 is a diagram showing an operation of a media engine of a receiver based on disparity information processing capability according to an embodiment of the present invention;
FIG. 48 is a diagram showing a method of transmitting a broadcast signal according to an embodiment of the present invention; and
FIG. 49 is a diagram showing a broadcast signal transmission apparatus according to an embodiment of the present invention.

### [Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention. The following detailed description includes specific details in order to provide a thorough understanding of the present invention. However, it will be apparent to those skilled in the art that the present invention may be practiced without such specific details.

Although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

The present invention provides apparatuses and methods for transmitting and receiving broadcast signals for future broadcast services. Future broadcast services according to an embodiment of the present invention include a terrestrial broadcast service, a mobile broadcast service, an ultra high definition television (UHDTV) service, etc. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

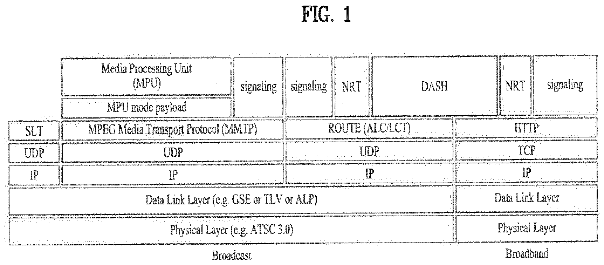

FIG. 1 is a diagram showing a protocol stack according to an embodiment of the present invention.

A service may be delivered to a receiver through a plurality of layers. First, a transmission side may generate service data. The service data may be processed for transmission at a delivery layer of the transmission side and the service data may be encoded into a broadcast signal and transmitted over a broadcast or broadband network at a physical layer.

Here, the service data may be generated in an ISO base media file format (BMFF). ISO BMFF media files may be used for broadcast/broadband network delivery, media encapsulation and/or synchronization format. Here, the service data is all data related to the service and may include service components configuring a linear service, signaling information thereof, non real time (NRT) data and other files.

The delivery layer will be described. The delivery layer may provide a function for transmitting service data. The service data may be delivered over a broadcast and/or broadband network.

Broadcast service delivery may include two methods.

As a first method, service data may be processed in media processing units (MPUs) based on MPEG media transport (MMT) and transmitted using an MMT protocol (MMTP). In this case, the service data delivered using the MMTP may include service components for a linear service and/or service signaling information thereof.

As a second method, service data may be processed into DASH segments and transmitted using real time object delivery over unidirectional transport (ROUTE), based on MPEG DASH. In this case, the service data delivered through the ROUTE protocol may include service components for a linear service, service signaling information thereof and/or NRT data. That is, the NRT data and non-timed data such as files may be delivered through ROUTE.

Data processed according to MMTP or ROUTE protocol may be processed into IP packets through a UDP/IP layer. In service data delivery over the broadcast network, a service list table (SLT) may also be delivered over the broadcast network through a UDP/IP layer. The SLT may be delivered in a low level signaling (LLS) table. The SLT and LLS table will be described later.

IP packets may be processed into link layer packets in a link layer. The link layer may encapsulate various formats of data delivered from a higher layer into link layer packets and then deliver the packets to a physical layer. The link layer will be described later.

In hybrid service delivery, at least one service element may be delivered through a broadband path. In hybrid service delivery, data delivered over broadband may include service components of a DASH format, service signaling information thereof and/or NRT data. This data may be processed through HTTP/TCP/IP and delivered to a physical layer for broadband transmission through a link layer for broadband transmission.

The physical layer may process the data received from the delivery layer (higher layer and/or link layer) and transmit the data over the broadcast or broadband network. A detailed description of the physical layer will be given later.

The service will be described. The service may be a collection of service components displayed to a user, the components may be of various media types, the service may be continuous or intermittent, the service may be real time or non real time, and a real-time service may include a sequence of TV programs.

The service may have various types. First, the service may be a linear audio/video or audio service having app based enhancement. Second, the service may be an app based service, reproduction/configuration of which is controlled by a downloaded application. Third, the service may be an ESG service for providing an electronic service guide (ESG). Fourth, the service may be an emergency alert (EA) service for providing emergency alert information.

When a linear service without app based enhancement is delivered over the broadcast network, the service component may be delivered by (1) one or more ROUTE sessions or (2) one or more MMTP sessions.

When a linear service having app based enhancement is delivered over the broadcast network, the service component may be delivered by (1) one or more ROUTE sessions or (2) zero or more MMTP sessions. In this case, data used for app based enhancement may be delivered through a ROUTE session in the form of NRT data or other files. In one embodiment of the present invention, simultaneous delivery of linear service components (streaming media components) of one service using two protocols may not be allowed.

When an app based service is delivered over the broadcast network, the service component may be delivered by one or more ROUTE sessions. In this case, the service data used for the app based service may be delivered through the ROUTE session in the form of NRT data or other files.

Some service components of such a service, some NRT data, files, etc. may be delivered through broadband (hybrid service delivery).

That is, in one embodiment of the present invention, linear service components of one service may be delivered through the MMT protocol. In another embodiment of the present invention, the linear service components of one service may be delivered through the ROUTE protocol. In another embodiment of the present invention, the linear service components of one service and NRT data (NRT service components) may be delivered through the ROUTE protocol. In another embodiment of the present invention, the linear service components of one service may be delivered through the MMT protocol and the NRT data (NRT service components) may be delivered through the ROUTE protocol. In the above-described embodiments, some service components of the service or some NRT data may be delivered through broadband. Here, the app based service and data regarding app based enhancement may be delivered over the broadcast network according to ROUTE or through broadband in the form of NRT data. NRT data may be referred to as locally cached data.

Each ROUTE session includes one or more LCT sessions for wholly or partially delivering content components configuring the service. In streaming service delivery, the LCT session may deliver individual components of a user service, such as audio, video or closed caption stream. The streaming media is formatted into a DASH segment.

Each MMTP session includes one or more MMTP packet flows for delivering all or some of content components or an MMT signaling message. The MMTP packet flow may deliver a component formatted into MPU or an MMT signaling message.

For delivery of an NRT user service or system metadata, the LCT session delivers a file based content item. Such content files may include consecutive (timed) or discrete (non-timed) media components of the NRT service or metadata such as service signaling or ESG fragments. System metadata such as service signaling or ESG fragments may be delivered through the signaling message mode of the MMTP.

A receiver may detect a broadcast signal while a tuner tunes to frequencies. The receiver may extract and send an SLT to a processing module. The SLT parser may parse the SLT and acquire and store data in a channel map. The receiver may acquire and deliver bootstrap information of the SLT to a ROUTE or MMT client. The receiver may acquire and store an SLS. USBD may be acquired and parsed by a signaling parser.

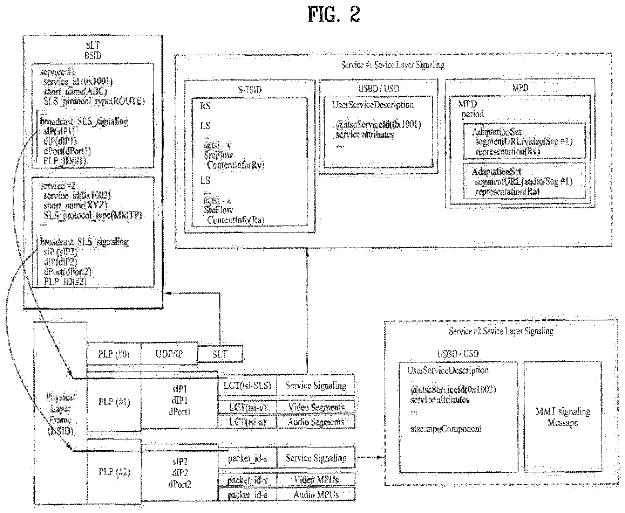

FIG. 2 is a diagram showing a service discovery procedure according to one embodiment of the present invention.

A broadcast stream delivered by a broadcast signal frame of a physical layer may carry low level signaling (LLS). LLS data may be carried through payload of IP packets delivered to a well-known IP address/port. This LLS may include an SLT according to type thereof. The LLS data may be formatted in the form of an LLS table. A first byte of every UDP/IP packet carrying the LLS data may be the start of the LLS table. Unlike the shown embodiment, an IP stream for delivering the LLS data may be delivered to a PLP along with other service data.

The SLT may enable the receiver to generate a service list through fast channel scan and provides access information for locating the SLS. The SLT includes bootstrap information. This bootstrap information may enable the receiver to acquire service layer signaling (SLS) of each service. When the SLS, that is, service signaling information, is delivered through ROUTE, the bootstrap information may include an LCT channel carrying the SLS, a destination IP address of a ROUTE session including the LCT channel and destination port information. When the SLS is delivered through the MMT, the bootstrap information may include a destination IP address of an MMTP session carrying the SLS and destination port information.

In the shown embodiment, the SLS of service #1 described in the SLT is delivered through ROUTE and the SLT may include bootstrap information sIP1, dIP1 and dPort1 of the ROUTE session including the LCT channel delivered by the SLS. The SLS of service #2 described in the SLT is delivered through MMT and the SLT may include bootstrap information sIP2, dIP2 and dPort2 of the MMTP session including the MMTP packet flow delivered by the SLS.

The SLS is signaling information describing the properties of the service and may include receiver capability information for significantly reproducing the service or providing information for acquiring the service and the service component of the service. When each service has separate service signaling, the receiver acquires appropriate SLS for a desired service without parsing all SLSs delivered within a broadcast stream.

When the SLS is delivered through the ROUTE protocol, the SLS may be delivered through a dedicated LCT channel of a ROUTE session indicated by the SLT. In some embodiments, this LCT channel may be an LCT channel identified by tsi=0. In this case, the SLS may include a user service bundle description (USBD)/user service description (USD), service-based transport session instance description (S-TSID) and/or media presentation description (MPD).

Here, USBD/USD is one of SLS fragments and may serve as a signaling hub describing detailed description information of a service. The USBD may include service identification information, device capability information, etc. The USBD may include reference information (URI reference) of other SLS fragments (S-TSID, MPD, etc.). That is, the USBD/USD may reference the S-TSID and the MPD. In addition, the USBD may further include metadata information for enabling the receiver to decide a transmission mode (broadcast/broadband network). A detailed description of the USBD/USD will be given below.

The S-TSID is one of SLS fragments and may provide overall session description information of a transport session carrying the service component of the service. The S-TSID may provide the ROUTE session through which the service component of the service is delivered and/or transport session description information for the LCT channel of the ROUTE session. The S-TSID may provide component acquisition information of service components associated with one service. The S-TSID may provide mapping between DASH representation of the MPD and the tsi of the service component. The component acquisition information of the S-TSID may be provided in the form of the identifier of the associated DASH representation and tsi and may or may not include a PLP ID in some embodiments. Through the component acquisition information, the receiver may collect audio/video components of one service and perform buffering and decoding of DASH media segments. The S-TSID may be referenced by the USBD as described above. A detailed description of the S-TSID will be given below.

The MPD is one of SLS fragments and may provide a description of DASH media presentation of the service. The MPD may provide a resource identifier of media segments and provide context information within the media presentation of the identified resources. The MPD may describe DASH representation (service component) delivered over the broadcast network and describe additional DASH presentation delivered over broadband (hybrid delivery). The MPD may be referenced by the USBD as described above.

When the SLS is delivered through the MMT protocol, the SLS may be delivered through a dedicated MMTP packet flow of the MMTP session indicated by the SLT. In some embodiments, the packet_id of the MMTP packets delivering the SLS may have a value of 00. In this case, the SLS may include a USBD/USD and/or MMT packet (MP) table.

Here, the USBD is one of SLS fragments and may describe detailed description information of a service as in ROUTE. This USBD may include reference information (URI information) of other SLS fragments. The USBD of the MMT may reference an MP table of MMT signaling. In some embodiments, the USBD of the MMT may include reference information of the S-TSID and/or the MPD. Here, the S-TSID is for NRT data delivered through the ROUTE protocol. Even when a linear service component is delivered through the MMT protocol, NRT data may be delivered via the ROUTE protocol. The MPD is for a service component delivered over broadband in hybrid service delivery. The detailed description of the USBD of the MMT will be given below.

The MP table is a signaling message of the MMT for MPU components and may provide overall session description information of an MMTP session carrying the service component of the service. In addition, the MP table may include a description of an asset delivered through the MMTP session. The MP table is streaming signaling information for MPU components and may provide a list of assets corresponding to one service and location information (component acquisition information) of these components. The detailed description of the MP table may be defined in the MMT or modified. Here, the asset is a multimedia data entity, is combined by one unique ID, and may mean a data entity used to one multimedia presentation. The asset may correspond to service components configuring one service. A streaming service component (MPU) corresponding to a desired service may be accessed using the MP table. The MP table may be referenced by the USBD as described above.

The other MMT signaling messages may be defined. Additional information associated with the service and the MMTP session may be described by such MMT signaling messages.

The ROUTE session is identified by a source IP address, a destination IP address and a destination port number. The LCT session is identified by a unique transport session identifier (TSI) within the range of a parent ROUTE session. The MMTP session is identified by a destination IP address and a destination port number. The MMTP packet flow is identified by a unique packet_id within the range of a parent MMTP session.

In case of ROUTE, the S-TSID, the USBD/USD, the MPD or the LCT session delivering the same may be referred to as a service signaling channel. In case of MMTP, the USBD/UD, the MMT signaling message or the packet flow delivering the same may be referred to as a service signaling channel.

Unlike the shown embodiment, one ROUTE or MMTP session may be delivered over a plurality of PLPs. That is, one service may be delivered through one or more PLPs. Unlike the shown embodiment, in some embodiments, components configuring one service may be delivered through different ROUTE sessions. In addition, in some embodiments, components configuring one service may be delivered through different MMTP sessions. In some embodiments, components configuring one service may be divided and delivered in a ROUTE session and an MMTP session. Although not shown, components configuring one service may be delivered through broadband (hybrid delivery).

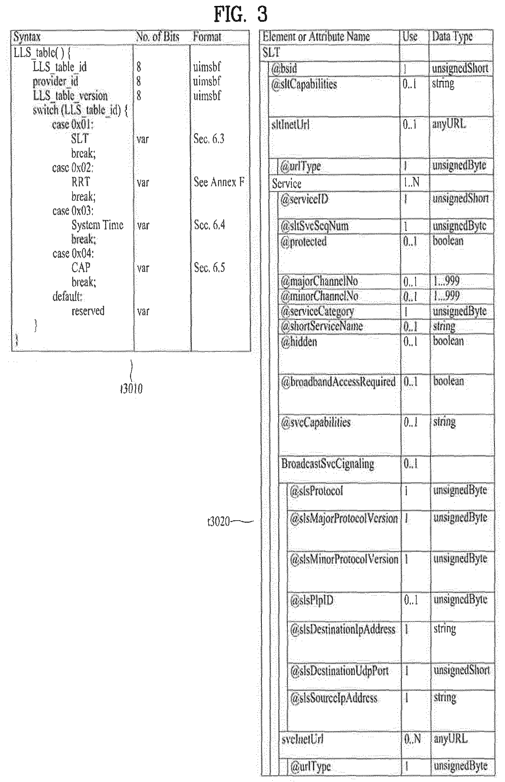

FIG. 3 is a diagram showing a low level signaling (LLS) table and a service list table (SLT) according to one embodiment of the present invention.

One embodiment t3010 of the LLS table may include information according to an LLS_table_id field, a provider_id field, an LLS_table_version field and/or an LLS_table_id field.

The LLS_table_id field may identify the type of the LLS table, and the provider_id field may identify a service provider associated with services signaled by the LLS table. Here, the service provider is a broadcaster using all or some of the broadcast streams and the provider_id field may identify one of a plurality of broadcasters which is using the broadcast streams. The LLS_table_version field may provide the version information of the LLS table.

According to the value of the LLS_table_id field, the LLS table may include one of the above-described SLT, a rating region table (RRT) including information on a content advisory rating, SystemTime information for providing information associated with a system time, a common alert protocol (CAP) message for providing information associated with emergency alert. In some embodiments, the other information may be included in the LLS table.

One embodiment t3020 of the shown SLT may include an @bsid attribute, an @sltCapabilities attribute, an sltInetUrl element and/or a Service element. Each field may be omitted according to the value of the shown Use column or a plurality of fields may be present.

The @bsid attribute may be the identifier of a broadcast stream. The @sltCapabilities attribute may provide capability information required to decode and significantly reproduce all services described in the SLT. The sltInetUrl element may provide base URL information used to obtain service signaling information and ESG for the services of the SLT over broadband. The sltInetUrl element may further include an @urlType attribute, which may indicate the type of data capable of being obtained through the URL.

The Service element may include information on services described in the SLT, and the Service element of each service may be present. The Service element may include an @serviceId attribute, an @sltSvcSeqNum attribute, an @protected attribute, an @majorChannelNo attribute, an @minorChannelNo attribute, an @serviceCategory attribute, an @shortServiceName attribute, an @hidden attribute, an @broadbandAccessRequired attribute, an @svcCapabilities attribute, a BroadcastSvcSignaling element and/or an svcInetUrl element.

The @serviceId attribute is the identifier of the service and the @sltSvcSeqNum attribute may indicate the sequence number of the SLT information of the service. The @protected attribute may indicate whether at least one service component necessary for significant reproduction of the service is protected. The @majorChannelNo attribute and the @minorChannelNo attribute may indicate the major channel number and minor channel number of the service, respectively.

The @serviceCategory attribute may indicate the category of the service. The category of the service may include a linear A/V service, a linear audio service, an app based service, an ESG service, an EAS service, etc. The @shortServiceName attribute may provide the short name of the service. The @hidden attribute may indicate whether the service is for testing or proprietary use. The @broadbandAccessRequired attribute may indicate whether broadband access is necessary for significant reproduction of the service. The @svcCapabilities attribute may provide capability information necessary for decoding and significant reproduction of the service.

The BroadcastSvcSignaling element may provide information associated with broadcast signaling of the service. This element may provide information such as location, protocol and address with respect to signaling over the broadcast network of the service. Details thereof will be described below.

The svcInetUrl element may provide URL information for accessing the signaling information of the service over broadband. The sltInetUrl element may further include an @urlType attribute, which may indicate the type of data capable of being obtained through the URL.

The above-described BroadcastSvcSignaling element may include an @slsProtocol attribute, an @slsMajorProtocolVersion attribute, an @slsMinorProtocolVersion attribute, an @slsPlpId attribute, an @slsDestinationIpAddress attribute, an @slsDestinationUdpPort attribute and/or an @slsSourceIpAddress attribute.

The @slsProtocol attribute may indicate the protocol used to deliver the SLS of the service (ROUTE, MMT, etc.). The @slsMajorProtocolVersion attribute and the @slsMinorProtocolVersion attribute may indicate the major version number and minor version number of the protocol used to deliver the SLS of the service, respectively.

The @slsPlpId attribute may provide a PLP identifier for identifying the PLP delivering the SLS of the service. In some embodiments, this field may be omitted and the PLP information delivered by the SLS may be checked using a combination of the information of the below-described LMT and the bootstrap information of the SLT.

The @slsDestinationIpAddress attribute, the @slsDestinationUdpPort attribute and the @slsSourceIpAddress attribute may indicate the destination IP address, destination UDP port and source IP address of the transport packets delivering the SLS of the service, respectively. These may identify the transport session (ROUTE session or MMTP session) delivered by the SLS. These may be included in the bootstrap information.

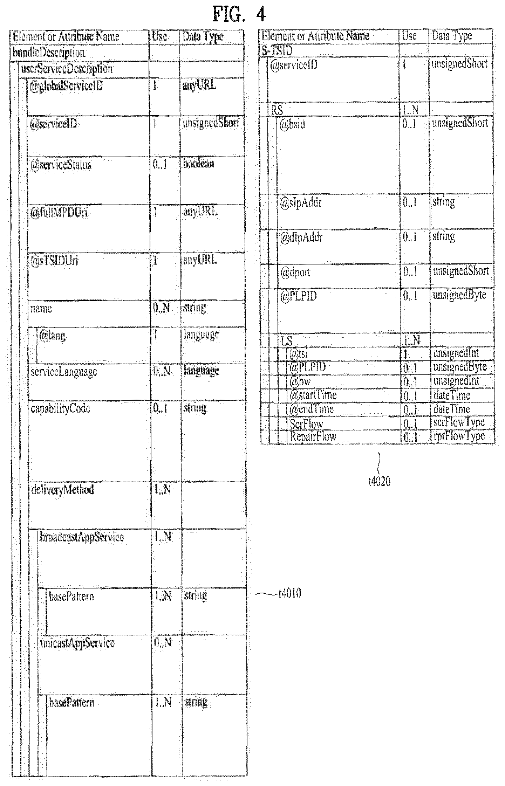

FIG. 4 is a diagram showing a USBD and an S-TSID delivered through ROUTE according to one embodiment of the present invention.

One embodiment t4010 of the shown USBD may have a bundleDescription root element. The bundleDescription root element may have a userServiceDescription element. The userServiceDescription element may be an instance of one service.

The userServiceDescription element may include an @globalServiceID attribute, an @serviceId attribute, an @serviceStatus attribute, an @fullMPDUri attribute, an @sTSIDUri attribute, a name element, a serviceLanguage element, a capabilityCode element and/or a deliveryMethod element. Each field may be omitted according to the value of the shown Use column or a plurality of fields may be present.

The @globalServiceID attribute is the globally unique identifier of the service and may be used for link with ESG data (Service@globalServiceID). The @serviceId attribute is a reference corresponding to the service entry of the SLT and may be equal to the service ID information of the SLT. The @serviceStatus attribute may indicate the status of the service. This field may indicate whether the service is active or inactive.

The @fullMPDUri attribute may reference the MPD fragment of the service. The MPD may provide a reproduction description of a service component delivered over the broadcast or broadband network as described above. The @sTSIDUri attribute may reference the S-TSID fragment of the service. The S-TSID may provide parameters associated with access to the transport session carrying the service as described above.

The name element may provide the name of the service. This element may further include an @lang attribute and this field may indicate the language of the name provided by the name element. The serviceLanguage element may indicate available languages of the service. That is, this element may arrange the languages capable of being provided by the service.

The capabilityCode element may indicate capability or capability group information of a receiver necessary to significantly reproduce the service. This information is compatible with capability information format provided in service announcement.

The deliveryMethod element may provide transmission related information with respect to content accessed over the broadcast or broadband network of the service. The deliveryMethod element may include a broadcastAppService element and/or a unicastAppService element. Each of these elements may have a basePattern element as a sub element.

The broadcastAppService element may include transmission associated information of the DASH representation delivered over the broadcast network. The DASH representation may include media components over all periods of the service presentation.

The basePattern element of this element may indicate a character pattern used for the receiver to perform matching with the segment URL. This may be used for a DASH client to request the segments of the representation. Matching may imply delivery of the media segment over the broadcast network.

The unicastAppService element may include transmission related information of the DASH representation delivered over broadband. The DASH representation may include media components over all periods of the service media presentation.

The basePattern element of this element may indicate a character pattern used for the receiver to perform matching with the segment URL. This may be used for a DASH client to request the segments of the representation. Matching may imply delivery of the media segment over broadband.

One embodiment t4020 of the shown S-TSID may have an S-TSID root element. The S-TSID root element may include an @serviceId attribute and/or an RS element. Each field may be omitted according to the value of the shown Use column or a plurality of fields may be present.

The @serviceId attribute is the identifier of the service and may reference the service of the USBD/USD. The RS element may describe information on ROUTE sessions through which the service components of the service are delivered. According to the number of ROUTE sessions, a plurality of elements may be present. The RS element may further include an @bsid attribute, an @sIpAddr attribute, an @dIpAddr attribute, an @dport attribute, an @PLPID attribute and/or an LS element.

The @bsid attribute may be the identifier of a broadcast stream in which the service components of the service are delivered. If this field is omitted, a default broadcast stream may be a broadcast stream including the PLP delivering the SLS of the service. The value of this field may be equal to that of the @bsid attribute.

The @sIpAddr attribute, the @dIpAddr attribute and the @dport attribute may indicate the source IP address, destination IP address and destination UDP port of the ROUTE session, respectively. When these fields are omitted, the default values may be the source address, destination IP address and destination UDP port values of the current ROUTE session delivering the SLS, that is, the S-TSID. This field may not be omitted in another ROUTE session delivering the service components of the service, not in the current ROUTE session.

The @PLPID attribute may indicate the PLP ID information of the ROUTE session. If this field is omitted, the default value may be the PLP ID value of the current PLP delivered by the S-TSID. In some embodiments, this field is omitted and the PLP ID information of the ROUTE session may be checked using a combination of the information of the below-described LMT and the IP address/UDP port information of the RS element.

The LS element may describe information on LCT channels through which the service components of the service are transmitted. According to the number of LCT channel, a plurality of elements may be present. The LS element may include an @tsi attribute, an @PLPID attribute, an @bw attribute, an @startTime attribute, an @endTime attribute, a SrcFlow element and/or a RepairFlow element.

The @tsi attribute may indicate the tsi information of the LCT channel. Using this, the LCT channels through which the service components of the service are delivered may be identified. The @PLPID attribute may indicate the PLP ID information of the LCT channel. In some embodiments, this field may be omitted. The @bw attribute may indicate the maximum bandwidth of the LCT channel. The @startTime attribute may indicate the start time of the LCT session and the @endTime attribute may indicate the end time of the LCT channel.

The SrcFlow element may describe the source flow of ROUTE. The source protocol of ROUTE is used to transmit a delivery object and at least one source flow may be established within one ROUTE session. The source flow may deliver associated objects as an object flow.

The RepairFlow element may describe the repair flow of ROUTE. Delivery objects delivered according to the source protocol may be protected according to forward error correction (FEC) and the repair protocol may define an FEC framework enabling FEC protection.

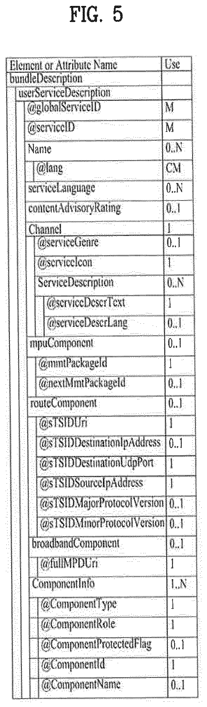

FIG. 5 is a diagram showing a USBD delivered through MMT according to one embodiment of the present invention.

One embodiment of the shown USBD may have a bundleDescription root element. The bundleDescription root element may have a userServiceDescription element. The userServiceDescription element may be an instance of one service.

The userServiceDescription element may include an @globalServiceID attribute, an @serviceId attribute, a Name element, a serviceLanguage element, a contentAdvisoryRating element, a Channel element, a mpuComponent element, a routeComponent element, a broadbandComponent element and/or a ComponentInfo element. Each field may be omitted according to the value of the shown Use column or a plurality of fields may be present.

The @globalServiceID attribute, the @serviceId attribute, the Name element and/or the serviceLanguage element may be equal to the fields of the USBD delivered through ROUTE. The contentAdvisoryRating element may indicate the content advisory rating of the service. This information is compatible with content advisory rating information format provided in service announcement. The Channel element may include information associated with the service. A detailed description of this element will be given below.

The mpuComponent element may provide a description of service components delivered as the MPU of the service. This element may further include an @mmtPackageId attribute and/or an @nextMmtPackageId attribute. The @mmtPackageId attribute may reference the MMT package of the service components delivered as the MPU of the service. The @nextMmtPackageId attribute may reference an MMT package to be used after the MMT package referenced by the @mmtPackageId attribute in terms of time. Through the information of this element, the MP table may be referenced.

The routeComponent element may include a description of the service components of the service. Even when linear service components are delivered through the MMT protocol, NRT data may be delivered according to the ROUTE protocol as described above. This element may describe information on such NRT data. A detailed description of this element will be given below.

The broadbandComponent element may include the description of the service components of the service delivered over broadband. In hybrid service delivery, some service components of one service or other files may be delivered over broadband. This element may describe information on such data. This element may further an @fullMPDUri attribute. This attribute may reference the MPD describing the service component delivered over broadband. In addition to hybrid service delivery, the broadcast signal may be weakened due to traveling in a tunnel and thus this element may be necessary to support handoff between broadband and broadband. When the broadcast signal is weak, the service component is acquired over broadband and, when the broadcast signal becomes strong, the service component is acquired over the broadcast network to secure service continuity.

The ComponentInfo element may include information on the service components of the service. According to the number of service components of the service, a plurality of elements may be present. This element may describe the type, role, name, identifier or protection of each service component. Detailed information of this element will be described below.

The above-described Channel element may further include an @serviceGenre attribute, an @serviceIcon attribute and/or a ServiceDescription element. The @serviceGenre attribute may indicate the genre of the service and the @serviceIcon attribute may include the URL information of the representative icon of the service. The ServiceDescription element may provide the service description of the service and this element may further include an @serviceDescrText attribute and/or an @serviceDescrLang attribute. These attributes may indicate the text of the service description and the language used in the text.

The above-described routeComponent element may further include an @sTSIDUri attribute, an @sTSIDDestinationIpAddress attribute, an @sTSIDDestinationUdpPort attribute, an @sTSIDSourceIpAddress attribute, an @sTSIDMajorProtocolVersion attribute and/or an @sTSIDMinorProtocolVersion attribute.

The @sTSIDUri attribute may reference an S-TSID fragment. This field may be equal to the field of the USBD delivered through ROUTE. This S-TSID may provide access related information of the service components delivered through ROUTE. This S-TSID may be present for NRT data delivered according to the ROUTE protocol in a state of delivering linear service component according to the MMT protocol.

The @sTSIDDestinationIpAddress attribute, the @sTSIDDestinationUdpPort attribute and the @sTSIDSourceIpAddress attribute may indicate the destination IP address, destination UDP port and source IP address of the transport packets carrying the above-described S-TSID. That is, these fields may identify the transport session (MMTP session or the ROUTE session) carrying the above-described S-TSID.

The @sTSIDMajorProtocolVersion attribute and the @sTSIDMinorProtocolVersion attribute may indicate the major version number and minor version number of the transport protocol used to deliver the above-described S-TSID, respectively.

The above-described ComponentInfo element may further include an @componentType attribute, an @componentRole attribute, an @componentProtectedFlag attribute, an @componentId attribute and/or an @componentName attribute.

The @componentType attribute may indicate the type of the component. For example, this attribute may indicate whether the component is an audio, video or closed caption component. The @componentRole attribute may indicate the role of the component. For example, this attribute may indicate main audio, music, commentary, etc. if the component is an audio component. This attribute may indicate primary video if the component is a video component. This attribute may indicate a normal caption or an easy reader type if the component is a closed caption component.

The @componentProtectedFlag attribute may indicate whether the service component is protected, for example, encrypted. The @componentId attribute may indicate the identifier of the service component. The value of this attribute may be the asset_id (asset ID) of the MP table corresponding to this service component. The @componentName attribute may indicate the name of the service component.

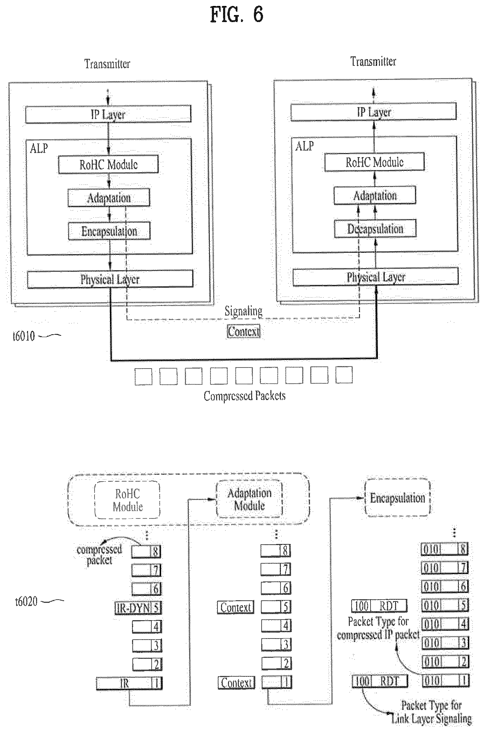

FIG. 6 is a diagram showing link layer operation according to one embodiment of the present invention.

The link layer may be a layer between a physical layer and a network layer. A transmission side may transmit data from the network layer to the physical layer and a reception side may transmit data from the physical layer to the network layer (t6010). The purpose of the link layer is to compress (abstract) all input packet types into one format for processing by the physical layer and to secure flexibility and expandability of an input packet type which is not defined yet. In addition, the link layer may provide option for compressing (abstracting) unnecessary information of the header of input packets to efficiently transmit input data. Operation such as overhead reduction, encapsulation, etc. of the link layer is referred to as a link layer protocol and packets generated using this protocol may be referred to as link layer packets. The link layer may perform functions such as packet encapsulation, overhead reduction and/or signaling transmission.

At the transmission side, the link layer (ALP) may perform an overhead reduction procedure with respect to input packets and then encapsulate the input packets into link layer packets. In addition, in some embodiments, the link layer may perform encapsulation into the link layer packets without performing the overhead reduction procedure. Due to use of the link layer protocol, data transmission overhead on the physical layer may be significantly reduced and the link layer protocol according to the present invention may provide IP overhead reduction and/or MPEG-2 TS overhead reduction.

When the shown IP packets are input as input packets (t6010), the link layer may sequentially perform IP header compression, adaptation and/or encapsulation. In some embodiments, some processes may be omitted. For example, the RoHC module may perform IP packet header compression to reduce unnecessary overhead. Context information may be extracted through the adaptation procedure and transmitted out of band. The IP header compression and adaption procedure may be collectively referred to as IP header compression. Thereafter, the IP packets may be encapsulated into link layer packets through the encapsulation procedure.

When MPEG 2 TS packets are input as input packets, the link layer may sequentially perform overhead reduction and/or an encapsulation procedure with respect to the TS packets. In some embodiments, some procedures may be omitted. In overhead reduction, the link layer may provide sync byte removal, null packet deletion and/or common header removal (compression). Through sync byte removal, overhead reduction of 1 byte may be provided per TS packet. Null packet deletion may be performed in a manner in which reinsertion is possible at the reception side. In addition, deletion (compression) may be performed in a manner in which common information between consecutive headers may be restored at the reception side. Some of the overhead reduction procedures may be omitted. Thereafter, through the encapsulation procedure, the TS packets may be encapsulated into link layer packets. The link layer packet structure for encapsulation of the TS packets may be different from that of the other types of packets.

First, IP header compression will be described.

The IP packets may have a fixed header format but some information necessary for a communication environment may be unnecessary for a broadcast environment. The link layer protocol may compress the header of the IP packet to provide a mechanism for reducing broadcast overhead.

IP header compression may include a header compressor/decompressor and/or an adaptation module. The IP header compressor (RoHC compressor) may reduce the size of each IP packet based on a RoHC method. Then, adaptation module may extract context information and generate signaling information from each packet stream. A receiver may parse signaling information related to a corresponding packet stream and attach the context information to the packet stream. The RoHC decompressor may recover a packet header to reconfigure an original IP packet. Hereinafter, IP header compression may refer to only IP header compressor via header compressor and may be a concept that combines IP header compression and the adaptation procedure by the adaptation module. This may be the same as in decompressing.

Hereinafter, adaptation will be described.

In transmission of a single-direction link, when the receiver does not have context information, the decompressor cannot restore the received packet header until complete context is received. This may lead to channel change delay and turn-on delay. Accordingly, through the adaptation function, configuration parameters and context information between the compressor and the decompressor may be transmitted out of band. The adaptation function may construct link layer signaling using context information and/or configuration parameters. The adaptation function may periodically transmit link layer signaling through each physical frame using a previous configuration parameter and/or context information.

Context information is extracted from the compressed IP packets and various methods may be used according to adaptation mode.

Mode #1 refers to a mode in which no operation is performed with respect to the compressed packet stream and an adaptation module operates as a buffer.

Mode #2 refers to a mode in which an IR packet is detected from a compressed packet stream to extract context information (static chain). After extraction, the IR packet is converted into an IR-DYN packet and the IR-DYN packet may be transmitted in the same order within the packet stream in place of an original IR packet.

Mode #3 (t6020) refers to a mode in which IR and IR-DYN packets are detected from a compressed packet stream to extract context information. A static chain and a dynamic chain may be extracted from the IR packet and a dynamic chain may be extracted from the IR-DYN packet. After extraction, the IR and IR-DYN packets are converted into normal compression packets. The converted packets may be transmitted in the same order within the packet stream in place of original IR and IR-DYN packets.

In each mode, the context information is extracted and the remaining packets may be encapsulated and transmitted according to the link layer packet structure for the compressed IP packets. The context information may be encapsulated and transmitted according to the link layer packet structure for signaling information, as link layer signaling.

The extracted context information may be included in a RoHC-U description table (RDT) and may be transmitted separately from the RoHC packet flow. Context information may be transmitted through a specific physical data path along with other signaling information. The specific physical data path may mean one of normal PLPs, a PLP in which low level signaling (LLS) is delivered, a dedicated PLP or an L1 signaling path. Here, the RDT may be context information (static chain and/or dynamic chain) and/or signaling information including information associated with header compression. In some embodiments, the RDT may be transmitted whenever context information is changed. In some embodiments, the RDT may be transmitted in every physical frame. To transmit the RDT in every physical frame, a previous RDT may be re-used.

The receiver may select a first PLP and first acquire signaling information of the SLT, the RDT, etc., prior to acquisition of a packet stream. Upon acquring the signaling information, the receiver may combine the information to acquire mapping of service - IP information - context information - PLP. That is, the receiver may recognize IP streams through which a service is transmitted, IP streams transmitted through a PLP, and so on and acquire corresponding context information of the PLPs. The receiver may select a PLP for delivery of a specific packet stream and decode the PLP. The adaptation module may parse the context information and combine the context information with the compressed packets. Thereby, the packet stream may be recovered and transmitted to the RoHC de compressor. Then, decompression may be started. In this case, the receiver may detect an IR packet and start decompression from a first received IR packet according to an adaptation mode (mode 1), may detect an IR-DYN packet and start decompression from a first received IR-DYN packet (mode 2), or may start decompression from any general compressed packet (mode 3).

Hereinafter, packet encapsulation will be described.

The link layer protocol may encapsulate all types of input packets such as IP packets, TS packets, etc. into link layer packets. To this end, the physical layer processes only one packet format independently of the protocol type of the network layer (here, an MPEG-2 TS packet is considered as a network layer packet). Each network layer packet or input packet is modified into the payload of a generic link layer packet.

In the packet encapsulation procedure, segmentation may be used. If the network layer packet is too large to be processed in the physical layer, the network layer packet may be segmented into two or more segments. The link layer packet header may include fields for segmentation of the transmission side and recombination of the reception side. Each segment may be encapsulated into the link layer packet in the same order as the original location.

In the packet encapsulation procedure, concatenation may also be used. If the network layer packet is sufficiently small such that the payload of the link layer packet includes several network layer packets, concatenation may be performed. The link layer packet header may include fields for performing concatenation. In concatenation, the input packets may be encapsulated into the payload of the link layer packet in the same order as the original input order.

The link layer packet may include a header and a payload. The header may include a base header, an additional header and/or an optional header. The additional header may be further added according to situation such as concatenation or segmentation and the additional header may include fields suitable for situations. In addition, for delivery of the additional information, the optional header may be further included. Each header structure may be pre-defined. As described above, if the input packets are TS packets, a link layer header having packets different from the other packets may be used.

Hereinafter, link layer signaling will be described.

Link layer signaling may operate at a level lower than that of the IP layer. The reception side may acquire link layer signaling faster than IP level signaling of the LLS, the SLT, the SLS, etc. Accordingly, link layer signaling may be acquired before session establishment.

Link layer signaling may include internal link layer signaling and external link layer signaling. Internal link layer signaling may be signaling information generated at the link layer. This includes the above-described RDT or the below-described LMT. External link layer signaling may be signaling information received from an external module, an external protocol or a higher layer. The link layer may encapsulate link layer signaling into a link layer packet and deliver the link layer packet. A link layer packet structure (header structure) for link layer signaling may be defined and link layer signaling information may be encapsulated according to this structure.

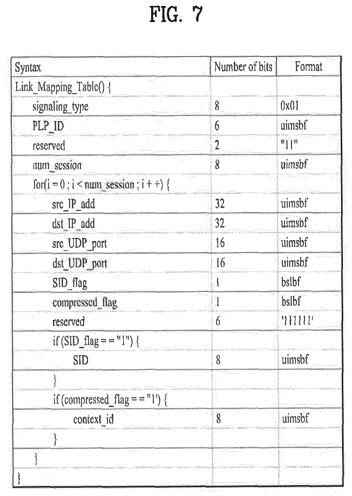

FIG. 7 is a diagram showing a link mapping table (LMT) according to one embodiment of the present invention.

The LMT may provide a list of higher layer sessions carried through the PLP. In addition, the LMT may provide additional information for processing link layer packets carrying the higher layer sessions. Here, the higher layer session may be referred to as multicast. Information on IP streams or transport sessions transmitted through one PLP may be acquired through the LMT. In contrast, information on through which PLP a specific transport session is delivered may be acquired.

The LMT may be transmitted through any PLP identified to deliver the LLS. Here, the PLP for delivering the LLS may be identified by an LLS flag of L1 detail signaling information of a physical layer. The LLS flag may be a flag field indicating whether the LLS is transmitted through a corresponding PLP with respect to each PLP. Here, the L1 detail signaling information may be correspond to PLS2 data which will be described later.

That is, the LMT may also be transmitted through the same PLP along with the LLS. Each LMT may describe mapping between PLPs and IP address/port as described above. As described above, the LLS may include an SLT and, in this regard, the IP address/ports described by the LMT may be any IP address/ports related to any service, described by the SLT transmitted through the PLP such as a corresponding LMT.

In some embodiments, the PLP identifier information in the above-described SLT, SLS, etc. may be used to confirm information indicating through which PLP a specific transport session indicated by the SLT or SLS is transmitted may be confirmed.

In another embodiment, the PLP identifier information in the above-described SLT, SLS, etc. will be omitted and PLP information of the specific transport session indicated by the SLT or SLS may be confirmed by referring to the information in the LMT. In this case, the receiver may combine the LMT and other IP level signaling information to identify the PLP. Even in this embodiment, the PLP information in the SLT, SLS, etc. is not omitted and may remain in the SLT, SLS, etc.

The LMT according to the shown embodiment may include a signaling_type field, a PLP_ID field, a num_session field and/or information on each session. Although the LMT of the shown embodiment describes IP streams transmitted through one PLP, a PLP loop may be added to the LMT to describe information on a plurality of PLPs in some embodiments. In this case, as described above, the LMT may describe PLPs of all IP addresses/ports related to all service described by the SLT transmitted therewith using a PLP loop.

The signaling_type field may indicate the type of signaling information delivered by the table. The value of signaling_type field for the LMT may be set to 0x01. The signaling_type field may signaling_type field may be omitted. The PLP_ID field may identify a target PLP to be described. When the PLP loop is used, each PLP_ID field may identify each target PLP. Fields from the PLP_ID field may be included in the PLP loop. Here, the below-described PLP_ID field may be an identifier of one PLP of the PLP loop and the following fields may be fields corresponding to the corresponding PLP.

The num_session field may indicate the number of higher layer sessions delivered through the PLP identified by the PLP_ID field. According to the number indicated by the num_session field, information on each session may be included. This information may include a src_IP_add field, a dst_IP_add field, a src_UDP_port field, a dst_UDP_port field, an SID_flag field, a compressed_flag field, an SID field, and/or a context_id field.

The src_IP_add field, the dst_IP_add field, the src_UDP_port field, and the dst_UDP_port field may indicate the source IP address, the destination IP address, the source UDP port and the destination UDP port of the transport session among the higher layer sessions delivered through the PLP identified by the PLP_ID field.

The SID_flag field may indicate whether the link layer packet delivering the transport session has an SID field in the optional header. The link layer packet delivering the higher layer session may have an SID field in the optional header and the SID field value may be equal to that of the SID field in the LMT.

The compressed_flag field may indicate whether header compression is applied to the data of the link layer packet delivering the transport session. In addition, presence/absence of the below-described context_id field may be determined according to the value of this field. When header compression is applied (compressed_flag = 1), the RDT may be present and the PLP ID field of the RDT may have the same value as the corresponding PLP_ID field related to the present compressed_flag field.

The SID field may indicate a sub stream ID (SID) of link layer packets for delivering a corresponding transfer session. The link layer packets may include the SID having the same value as the present SID field in the optional header. Thereby, the receiver may filter link layer packets using information of the LMT and SID information of a link layer packet header without parsing of all link layer packets.

The context_id field may provide a reference for a context id (CID) in the RDT. The CID information of the RDT may indicate the context ID of the compression IP packet stream. The RDT may provide context information of the compression IP packet stream. Through this field, the RDT and the LMT may be associated.

In the above-described embodiments of the signaling information/table of the present invention, the fields, elements or attributes may be omitted or may be replaced with other fields. In some embodiments, additional fields, elements or attributes may be added.

In one embodiment of the present invention, service components of one service may be delivered through a plurality of ROUTE sessions. In this case, an SLS may be acquired through bootstrap information of an SLT. An S-TSID and an MPD may be referenced through the USBD of the SLS. The S-TSID may describe not only the ROUTE session delivered by the SLS but also transport session description information of another ROUTE session carried by the service components. To this end, the service components delivered through the plurality of ROUTE sessions may all be collected. This is similarly applicable to the case in which the service components of one service are delivered through a plurality of MMTP sessions. For reference, one service component may be simultaneously used by the plurality of services.

In another embodiment of the present invention, bootstrapping of an ESG service may be performed by a broadcast or broadband network. By acquiring the ESG over broadband, URL information of the SLT may be used. ESG information may be requested using this URL.

In another embodiment of the present invention, one service component of one service may be delivered over the broadcast network and the other service component may be delivered over broadband (hybrid). The S-TSID may describe components delivered over the broadcast network such that the ROUTE client acquires desired service components. In addition, the USBD may have base pattern information to describe which segments (which components) are delivered through which path. Accordingly, the receiver can confirm a segment to be requested from the broadband service and a segment to be detected in a broadcast stream.

In another embodiment of the present invention, scalable coding of a service may be performed. The USBD may have all capability information necessary to render the service. For example, when one service is provided in HD or UHD, the capability information of the USBD may have a value of "HD or UHD". The receiver may check which component is reproduced in order to render the UHD or HD service using the MPD.

In another embodiment of the present invention, through a TOI field of the LCT packets delivered through the LCT channel delivering the SLS, which SLS fragment is delivered using the LCT packets (USBD, S-TSID, MPD, etc.) may be identified.

In another embodiment of the present invention, app components to be used for app based enhancement/an app based service may be delivered over the broadcast network as NRT components or may be delivered over broadband. In addition, app signaling for app based enhancement may be performed by an application signaling table (AST) delivered along with the SLS. In addition, an event which is signaling for operation to be performed by the app may be delivered in the form of an event message table (EMT) along with the SLS, may be signaled in the MPD or may be in-band signaled in the form of a box within DASH representation. The AST, the EMT, etc. may be delivered over broadband. App based enhancement, etc. may be provided using the collected app components and such signaling information.

In another embodiment of the present invention, a CAP message may be included and provided in the above-described LLS table for emergency alert. Rich media content for emergency alert may also be provided. Rich media may be signaled by a CAP message and, if rich media is present, the rich media may be provided as an EAS service signaled by the SLT.

In another embodiment of the present invention, linear service components may be delivered over the broadcast network according to the MMT protocol. In this case, NRT data (e.g., app components) of the service may be delivered over the broadcast network according to the ROUTE protocol. In addition, the data of the service may be delivered over broadband. The receiver may access the MMTP session delivering the SLS using the bootstrap information of the SLT. The USBD of the SLS according to the MMT may reference the MP table such that the receiver acquires linear service components formatted into the MPU delivered according to the MMT protocol. In addition, the USBD may further reference the S-TSID such that the receiver acquires NRT data delivered according to the ROUTE protocol. In addition, the USBD may further reference the MPD to provide a reproduction description of data delivered over broadband.

In another embodiment of the present invention, the receiver may deliver location URL information capable of acquiring a file content item (file, etc.) and/or a streaming component to a companion device through a web socket method. The application of the companion device may acquire components, data, etc. through a request through HTTP GET using this URL. In addition, the receiver may deliver information such as system time information, emergency alert information, etc. to the companion device.

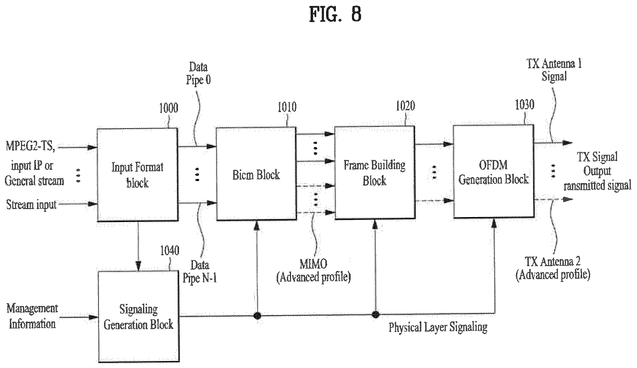

FIG. 8 is a diagram showing a structure of a broadcast signal transmission device of a next-generation broadcast service according to an embodiment of the present invention.

The broadcast signal transmission device of the next-generation broadcast service according to an embodiment of the present invention may include an input format block 1000, a bit interleaved coding & modulation (BICM) block 1010, a frame building block 1020, an orthogonal frequency division multiplexing (OFDM) generation block 1030, and a signaling generation block 1040. An operation of each block of the broadcast signal transmission device will be described.

According to an embodiment of the present invention, input data may use IP stream/packet and MPEG2-TS as main input format and other stream types may be handled as a general stream.

The input format block 1000 may demultiplex each input stream using one or more data pipes to which independent coding and modulation are applied. The data pipe may be a basic unit for robustness control and may affect quality of service (QoS). One or more services or service components may affect one data pipe. The data pipe may be a logical channel in a physical layer for delivering service data or metadata for delivering one or more services or service components.

Since QoS is dependent upon the characteristics of a service provided by the broadcast signal transmission device of the next-generation broadcast service according to an embodiment of the present invention, data corresponding to each service needs to be processed via different methods.

The BICM block 1010 may include a processing block applied to a profile (or system) to which MIMO is not applied and/or a processing block of a profile (or system) to which MIMO is applied and may include a plurality of processing blocks for processing each data pipe.

The processing block of the BICM block to which MIMO is not applied may include a data FEC encoder, a bit interleaver, a constellation mapper, a signal space diversity (SSD) encoding block, and a time interleaver. The processing block of the BICM block to which MIMO is applied is different from the processing block of the BICM to which MIMO is not applied in that a cell word demultiplexer and an MIMO encoding block are further included.

The data FEC encoder may perform FEC encoding on an input BBF to generate a FECBLOCK procedure using external coding (BCH) and internal coding (LDPC). The external coding (BCH) may be a selective coding method. The bit interleaver may interleave output of the data FEC encoder to achieve optimized performance using a combination of the LDPC code and a modulation method. The constellation mapper may modulate cell word from a bit interleaver or a cell word demultiplexer using QPSK, QAM-16, irregular QAM (NUQ-64, NUQ-256, NUQ-1024), or irregular constellation (NUC-16, NUC-64, NUC-256, NUC-1024) and provide a power-normalized constellation point. NUQ has an arbitrary type but QAM-16 and NUQ have a square shape. All of the NUQ and the NUC may be particularly defined with respect to each code rate and signaled by parameter DP_MOD of PLS2 data. The time interleaver may be operated at a data pipe level. A parameter of the time interleaving may be differently set with respect to each data pipe.

The time interleaver according to the present invention may be positioned between the BICM chain and the frame builder. In this case, the time interlever according to the present invention may selectively use a convolution interleaver (CI) and a block interleaver (BI) according to a physical layer pipe (PLP) mode or may use all. The PLP according to an embodiment of the present invention may be a physical path used using the same concept as the aforementioned DP and its term may be changed according to designer intention. The PLP mode according to an embodiment of the present invention may include a single PLP mode or a multiple PLP mode according to the number of PLPs processed by the broadcast signal transmitter or the broadcast signal transmission device. Time interleaving using different time interleaving methods according to a PLP mode may be referred to as hybrid time interleaving.

A hybrid time interleaver may include a block interleaver (BI) and a convolution interleaver (CI). In the case of PLP_NUM=1, the BI may not be applied (BI off) and only the CI may be applied. In the case of PLP_NUM>1, both the BI and the CI may be applied (BI on). The structure and operation of the CI applied in the case of PLP_NUM>1 may be different from those of the CI applied in the case of PLP_NUM=1. The hybrid time interleaver may perform an operation corresponding to a reverse operation of the aforementioned hybrid time interleaver.

The cell word demultiplexer may be used to divide a single cell word stream into a dual cell word stream for MIMO processing. The MIMO encoding block may process output of the cell word demultiplexer using a MIMO encoding method. The MIMO encoding method according to the present invention may be defined as full-rate spatial multiplexing (FR-SM) for providing increase in capacity via relatively low increase in complexity at a receiver side. MIMO processing may be applied at a data pipe level. When a pair of constellation mapper outputs, NUQ e_{1,i} and e_{2,i} is input to a MIMO encoder, a pair of MIMO encoder outputs, g1,i and g2,i may be transmitted by the same carrier k and OFDM symbol 1 of each transmission antenna.

The frame building block 1020 may map a data cell of an input data pipe in one frame to an OFDM symbol and perform frequency interleaving for frequency domain diversity.

According to an embodiment of the present invention, a frame may be divided into a preamble, one or more frame signaling symbols (FSS), and a normal data symbol. The preamble may be a special symbol for providing a combination of basic transmission parameters for effective transmission and reception of a signal. The preamble may signal a basic transmission parameter and a transmission type of a frame. In particular, the preamble may indicate whether an emergency alert service (EAS) is currently provided in a current frame. The objective of the FSS may be to transmit PLS data. For rapid synchronization and channel estimation and rapid decoding of PLS data, the FSS may have a pipe pattern with higher density than a normal data symbol.

The frame building block may include a delay compensation block for adjusting timing between a data pipe and corresponding PLS data to ensure co-time between a data pipe and corresponding PLS data at a transmitting side, a cell mapper for mapping a PLS, a data pipe, an auxiliary stream, a dummy stream, and so on to an active carrier of an OFDM symbol in a frame, and a frequency interleaver.

The frequency interleaver may randomly interleave a data cell received from the cell mapper to provide frequency diversity. The frequency interleaver may operate with respect to data corresponding to an OFDM symbol pair including two sequential OFDM symbols or data corresponding to one OFDM symbol using different interleaving seed orders in order to acquire maximum interleaving gain in a single frame.

The OFDM generation block 1030 may modulate an OFDM carrier by the cell generated by the frame building block, insert a pilot, and generate a time domain signal for transmission. The corresponding block may sequentially insert guard intervals and may apply PAPR reduction processing to generate a last RF signal.

The signaling generation block 1040 may generate physical layer signaling information used in an operation of each functional block. The signaling information according to an embodiment of the present invention may include PLS data. The PLS may provide an element for connecting a receiver to a physical layer data pipe. The PLS data may include PLS1 data and PLS2 data.

The PLS1 data may be a first combination of PLS data transmitted to FSS in a frame with fixed size, coding, and modulation for transmitting basic information on a system as well as a parameter required to data PLS2 data. The PLS1 data may provide a basic transmission parameter including a parameter required to receive and decode PLS2 data. The PLS2 data may be a second combination of PLP data transmitted to FSS for transmitting more detailed PLS data of a data pipe and a system. PLS2 signaling may further include two types of parameters of PLS2 static data (PLS2-STAT data) and PLS2 dynamic data (PLS2-DYN data). The PLS2 static data may be PLS2 data that is static during duration of a frame group and the PLS2 dynamic data may be PLS2 data that is dynamically changed every frame.

The PLS2 data may include FIC_FLAG information. A fast information channel (FIC) may be a dedicated channel for transmitting cross-layer information for enabling fast service acquisition and channel scanning. The FIC_FLAG information may indicate whether a fast information channel (FIC) is used in a current frame group via a 1-bit field. When a value of the corresponding field is set to 1, the FIC may be provided in the current frame. When a value of the corresponding field is set to 0, the FIC may not be transmitted in the current frame. The BICM block 1010 may include a BICM block for protecting PLS data. The BICM block for protecting the PLS data may include a PLS FEC encoder, a bit interleaver, and a constellation mapper.

The PLS FEC encoder may include a scrambler for scrambling PLS1 data and PLS2 data, a BCH encoding/zero inserting block for performing external encoding on the scrambled PLS 1 and 2 data using a BCH code shortened for PLS protection and inserting a zero bit after BCH encoding, a LDPC encoding block for performing encoding using an LDPC code, and an LDPC parity puncturing block. Only the PLS1 data may be permutated before an output bit of zero insertion is LDPC-encoded. The bit interleaver may interleave each of the shortened and punctured PLS1 data and PLS2 data, and the constellation mapper may map the bit-interleaved PLS1 data and PLS2 data to constellation.

A broadcast signal reception device of a next-generation broadcast service according to an embodiment of the present invention may perform a reverse operation of the broadcast signal transmission device of the next-generation broadcast service that has been described with reference to FIG. 8.

The broadcast signal reception device of a next-generation broadcast service according to an embodiment of the present invention may include a synchronization & demodulation module for performing demodulation corresponding to a reverse operation performed by the broadcast signal transmission device, a frame parsing module for parsing an input signal frame to extract data transmitted by a service selected by a user, a demapping & decoding module for converting an input signal into bit region data, deinterleaving bit region data as necessary, performing demapping on mapping applied for transmission efficiency, and correcting error that occurs in a transmission channel for decoding, an output processor for performing a reverse operation of various compression/signal processing procedures applied by the broadcast signal transmission device, and a signaling decoding module for acquiring and processing PLS information from the signal demodulated by the synchronization & demodulation module. The frame parsing module, the demapping & decoding module, and the output processor may perform the functions using the PLS data output from the signaling decoding module.

Hereinafter, the timer interleaver will be described. A time interleaving group according to an embodiment of the present invention may be directly mapped to one frame or may be spread over P_{I} frames. In addition, each time interleaving group may be divided into one or more (N_{TI}) time interleaving blocks. Here, each time interleaving block may correspond to one use of a time interleaver memory. A time interleaving block in the time interleaving group may include different numbers of XFECBLOCK. In general, the time interleaver may also function as a buffer with respect to data pipe data prior to a frame generation procedure.

The time interleaver according to an embodiment of the present invention may be a twisted row-column block interleaver. The twisted row-column block interleaver according to an embodiment of the present invention may write a first XFECBLOCK in a first column of the time interleaving memory, write a second XFECBLOCK in a next column, and write the remaining XFECBLOCKs in the time interleaving block in the same manner. In an interleaving array, a cell may be read in a diagonal direction to a last row from a first row (a leftmost column as a start column is read along a row in a right direction). In this case, to achieve single memory deinterleaving at a receiver side irrespective of the number of XFECBLOCK in the time interleaving block, the interleaving array for the twisted row-column block interleaver may insert a virtual XFECBLOCK into the time interleaving memory. In this case, to achieve single memory deinterleaving at a receiver side, the virtual XFECBLOCK needs to be inserted into another frontmost XFECBLOCK.

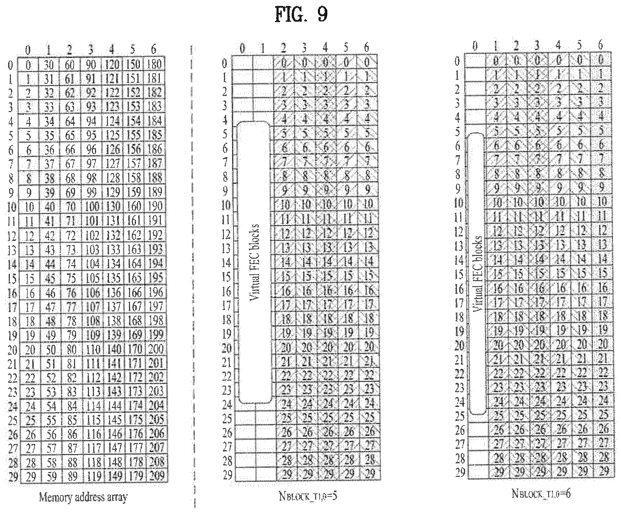

FIG. 9 is a diagram showing a writing operation of a time interleaver according to an embodiment of the present invention.

A block shown in a left portion of the drawing shows a TI memory address array and a block shown in a right portion of the drawing shows a writing operation when two or one virtual FEC blocks are inserted into a frontmost group of TI groups with respect to two consecutive TI groups.

The frequency interleaver according to an embodiment of the present invention may include an interleaving address generator for generating an interleaving address to be applied to data corresponding to a symbol pair.

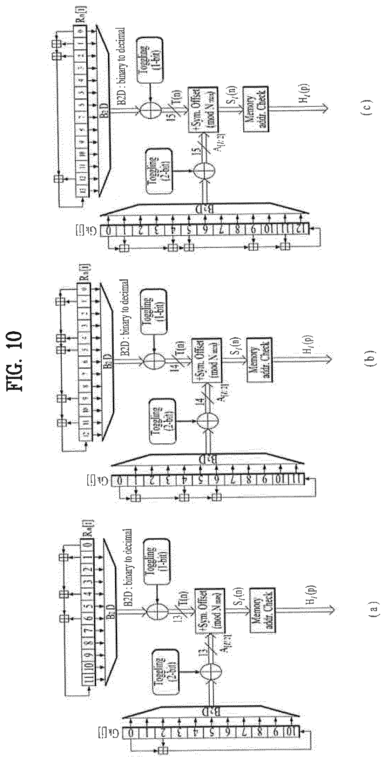

FIG. 10 is a block diagram of an interleaving address generator including a main-PRBS generator and a sub-PRBS generator according to each FFT mode, included in the frequency interleaver, according to an embodiment of the present invention.

(a) is a block diagram of an interleaving address generator with respect to a 8K FFT mode, (b) is a block diagram of an interleaving address generator with respect to a 16K FFT mode, and (c) is a block diagram of an interleaving address generator with respect to a 32K FFT mode.

An interleaving procedure with respect to an OFDM symbol pair may use one interleaving sequence and will be described below. First, an available data cell (output cell from a cell mapper) to be interleaved in one OFDM symbol O_{m,l} may be defined as O_{m,l} =[x_{m,l,0},....,x_{m,l,p},...,x_{m,l,Ndata-1}] with respect to *l* = 0, ..., N_{sym}-1. In this case, x_{m,l,p} may be a *p ^{th}* cell of a *l^{th}* OFDM symbol in a *m^{th}* frame and N_{data} may be the number of data cells. In the case of a frame signaling symbol, N_{data} = C_{FSS}, in the case of normal data, N_{data} = C_{data}, and in the case of a frame edge symbol, N_{data} = C_{FES}. In addition, the interleaving data cell may be defined as P_{m,l} =[V_{m,l,0},....,v_{m,l,Ndata-1}] with respect to *l* = 0, ..., N_{sym}-1.

With respect to an OFDM symbol pair, an interleaved OFDM symbol pair may be given according to v_{m,l,Hi(p)} = x_{m,l,p}, p=0,...,N_{data}-1 for a first OFDM symbol of each pair and given according to v_{m,l,p} = x_{m,l,Hi(p)}, p=0,...,N_{data}-1 for a second OFDM symbol of each pair. In this case, Hₗ(p) may be an interleaving address generated based on a cyclic shift value (symbol offset) of a PRBS generator and a sub-PRBS generator.

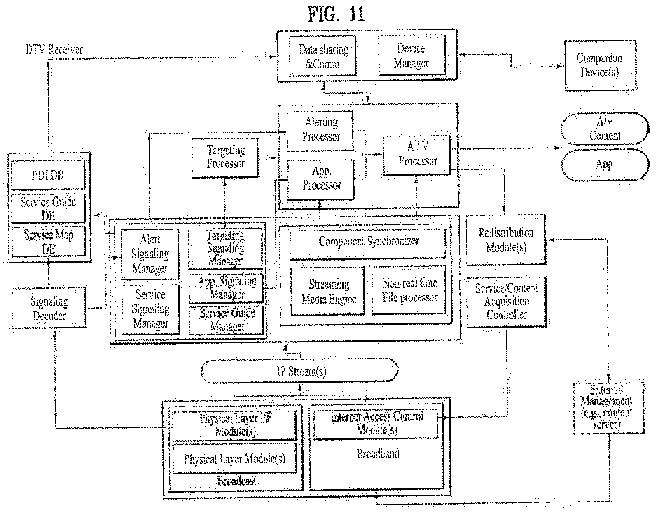

FIG. 11 is a block diagram illustrating a hybrid broadcast reception apparatus according to an embodiment of the present invention.

A hybrid broadcast system can transmit broadcast signals in connection with terrestrial broadcast networks and the Internet. The hybrid broadcast reception apparatus can receive broadcast signals through terrestrial broadcast networks (broadcast networks) and the Internet (broadband). The hybrid broadcast reception apparatus may include physical layer module(s), physical layer I/F module(s), service/content acquisition controller, Internet access control module(s), a signaling decoder, a service signaling manager, a service guide manager, an application signaling manager, an alert signal manager, an alert signaling parser, a targeting signaling parser, a streaming media engine, a non-real time file processor, a component synchronizer, a targeting processor, an application processor, an A/V processor, a device manager, a data sharing and communication unit, redistribution module(s), companion device(s) and/or an external management module.

The physical layer module(s) can receive a broadcast related signal through a terrestrial broadcast channel, process the received signal, convert the processed signal into an appropriate format and deliver the signal to the physical layer I/F module(s).

The physical layer I/F module(s) can acquire an IP datagram from information obtained from the physical layer module. In addition, the physical layer I/F module can convert the acquired IP datagram into a specific frame (e.g., RS frame, GSE, etc.).

The service/content acquisition controller can perform control operation for acquisition of services, content and signaling data related thereto through broadcast channels and/or broadband channels.

The Internet access control module(s) can control receiver operations for acquiring service, content, etc. through broadband channels.

The signaling decoder can decode signaling information acquired through broadcast channels.

The service signaling manager can extract signaling information related to service scan and/or content from the IP datagram, parse the extracted signaling information and manage the signaling information.

The service guide manager can extract announcement information from the IP datagram, manage a service guide (SG) database and provide a service guide.

The application signaling manager can extract signaling information related to application acquisition from the IP datagram, parse the signaling information and manage the signaling information.

The alert signaling parser can extract signaling information related to alerting from the IP datagram, parse the extracted signaling information and manage the signaling information.

The targeting signaling parser can extract signaling information related to service/content personalization or targeting from the IP datagram, parse the extracted signaling information and manage the signaling information. In addition, the targeting signaling parser can deliver the parsed signaling information to the targeting processor.

The streaming media engine can extract audio/video data for A/V streaming from the IP datagram and decode the audio/video data.

The non-real time file processor can extract NRT data and file type data such as applications, decode and manage the extracted data.

The component synchronizer can synchronize content and services such as streaming audio/video data and NRT data.

The targeting processor can process operations related to service/content personalization on the basis of the targeting signaling data received from the targeting signaling parser.

The application processor can process application related information and downloaded application state and represent parameters.

The A/V processor can perform audio/video rendering related operations on the basis of decoded audio/video data and application data.

The device manager can perform connection and data exchange with external devices. In addition, the device manager can perform operations of managing external devices connectable thereto, such as addition/deletion/update of the external devices.

The data sharing and communication unit can process information related to data transmission and exchange between a hybrid broadcast receiver and external devices. Here, data that can be transmitted and exchanged between the hybrid broadcast receiver and external devices may be signaling data, A/V data and the like.

The redistribution module(s) can acquire information related to future broadcast services and content when the broadcast receiver cannot directly receive terrestrial broadcast signals. In addition, the redistribution module can support acquisition of future broadcast services and content by future broadcast systems when the broadcast receiver cannot directly receive terrestrial broadcast signals.

The companion device(s) can share audio, video or signaling data by being connected to the broadcast receiver according to the present invention. The companion device may be an external device connected to the broadcast receiver.

The external management module can refer to a module for broadcast services/content provision. For example, the external management module can be a future broadcast services/content server. The external management module may be an external device connected to the broadcast receiver.

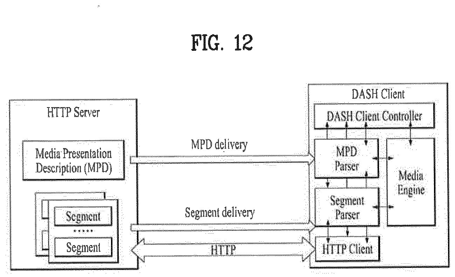

FIG. 12 is a diagram showing an overall operation of a DASH-based adaptive streaming model according to an embodiment of the present invention.

The present invention proposes a next-generation media service providing method for providing high dynamic range (HDR) supportable content. The present invention proposes related metadata and a method of transmitting the metadata when HDR content for expressing sufficient brightness is provided. Thereby, content may be adaptively adjusted according to characteristics of various scenes of content and image quality with enhanced content may be provided.

In the case of UHD broadcast, etc., brightness that is not capable of being expressed by existing content, thereby providing sense of high realism. By virtue of introduction of HDR, an expression range of brightness of a content image is increased and, thus, a difference between characteristics for respective scenes of content may be increased compared with a previous case. To effectively express characteristics for respective scenes of content on a display, metadata may be defined and transmitted to a receiver. An image of content may be appropriately provided according to intention of a service provider based on the metadata received by the receiver.

The present invention proposes a method of signaling an HDR parameter related to a video track, a video sample, and so on of content for providing HDR based on a media file such as ISOBMFF. The present invention proposes a method of storing and signaling HDR flags and/or parameter related to a video track (stream). The present invention proposes a method of storing and signaling HDR flags and/or parameter related to a video sample, a video sample, or a video sample entry. The present invention proposes a method of storing and signaling a SEI NAL unit containing HDR related information.

The method of transmitting/transmitting HDR information according to the present invention may be used to generate content for supporting HDR. That is, when a media file of content for supporting HDR is generated, a DASH segment operating in MPEG DASH is generated, or MPU operating in MPEG MMT is generated, the method according to the present invention may be used. A receiver (which includes a DASH client, an MMT client, or the like) may acquire HDR information (flag, parameter, box, etc.) from a decoder and so on and may effectively provide corresponding content based on the information.

The below-described HDR configuration box or HDR related flag information may be simultaneously present in a plurality of boxes in a media box, a DASH segment, or MMT MPU. In this case, the HDR information defined in a higher box may be overridden by HDR information defined in a lower box. For example, when HDR information is simultaneously included in a tkhd box and a vmhd box, HDR information of the tkhd box may be overridden by HDR information of the vmhd box.

The DASH-based adaptive streaming model according to the illustrated embodiment may write an operation between an HTTP server and a DASH client. Here, a dynamic adaptive streaming over HTTP (DASH) may be a protocol for supporting HTTP-based adaptive streaming and may dynamically support streaming according to a network situation. Accordingly, AV content reproduction may be seamlessly provided.

First, the DASH client may acquire MPD. The MPD may be transmitted from a service provider such as a HTTP server. The MPD may be transmitted according to delivery according to the aforementioned embodiment. The DASH client may request a server of corresponding segments using access information to a segment described in the MPD. Here, the request may reflect a network state and may be performed.

The DASH client may acquire a corresponding segment and, then, process the segment in a media engine and, then, display the segment on a screen. The DASH client may reflect a reproduction time and/or a network situation in real time and make a request for and acquire a required segment (Adaptive Streaming). Thereby, content may be seamlessly reproduced.

The media presentation description (MPD) may be represented in the form of XML as a file containing detailed information for permitting the DASH client to dynamically acquire a segment. In some embodiments, the MPD may be the same as the aforementioned MPD.

A DASH client controller may reflect a network situation to generate a command for making a request for MPD and/or a segment. The controller may control the acquired information to be used in an internal block such as a media engine.

A MPD parser may parse the acquired MPD in real time. Thereby, the DASH client controller may generate a command for acquiring a required segment.

A segment parser may parse the acquired segment in real time. Internal blocks such as a media engine may perform a specific operation according to information included in a segment.

A HTTP client may make a request for required MPD and/or segment to a HTTP server. The HTTP client may transmit the MPD and/or segments acquired from the server to the MPD parser or the segment parser.

The media engine may display content on a screen using media data included in a segment. In this case, information of the MPD may be used.

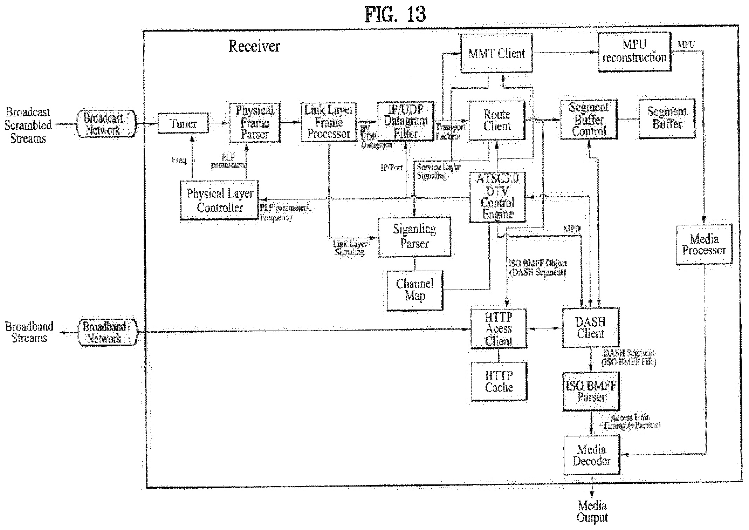

FIG. 13 is a block diagram of a receiver according to an embodiment of the present invention.

The receiver according to the illustrated embodiment may include a tuner, a physical layer controller, a physical frame parser, a link layer frame processor, an IP/UDP datagram filter, a DTV control engine, a route client, a segment buffer control, an MMT client, an MPU reconstruction, a media processor, a signaling parser, a DASH client, an ISO BMFF parser, a media decoder, and/or an HTTP access client. Each detailed block of the receiver may be a hardware processor.

The tuner may receive and process a broadcast signal through a terrestrial broadcast channel to tune the broadcast signal in a proper form (physical frame, etc.). The physical layer controller may control operations of the tuner, the physical frame parser, etc. using RF information, etc. of a broadcast channel as a reception target. The physical frame parser may parse the received physical frame and acquire a link layer frame, etc. via processing related to the physical frame.

The link layer frame processor may acquire link layer signaling, etc. from the link layer frame or may acquire IP/UDP datagram and may perform related calculation. The IP/UDP datagram filter may filter specific IP/UDP datagram from the received IP/UDP datagram. The DTV control engine may mange an interface between components and control each operation via transmission of a parameter, etc.

The route client may process a real-time object delivery over unidirectional transport (ROUTE) packet for supporting real-time object transmission and collect and process a plurality of packets to generate one or more base media file format (ISOBMFF) objects. The segment buffer control may control a buffer related to segment transmission between the route client and the dash client.

The MMT client may process a MPEG media transport (MMT) transport protocol packet for supporting real-time object transmission and collect and process a plurality of packets. The MPU reconstruction may reconfigure a media processing unit (MPU) from the MMTP packet. The media processor may collect and process the reconfigured MPU.

The signaling parser may acquire and parse DTV broadcast service related signaling (link layer/ service layer signaling) and generate and/or manage a channel map, etc. based thereon. This component may process low level signaling and service level signaling.

The DASH client may perform real-time streaming or adaptive streaming related calculation and process the acquired DASH segment, etc. The ISO BMFF parser may extract data of audio/video, a related parameter, and so on from the ISO BMFF object. The media decoder may process decoding and/or presentation of the received audio and video data. The HTTP access client may make a request for specific information to the HTTP server and process response to the request.

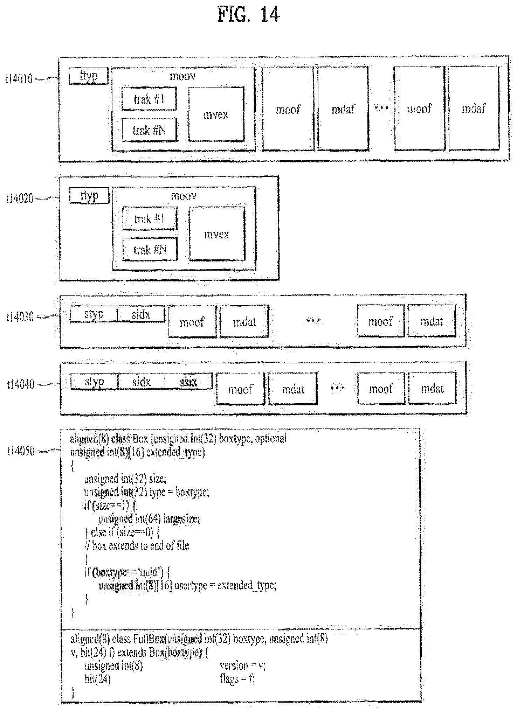

FIG. 14 is a diagram showing a configuration of a media file according to an embodiment of the present invention.

To store and transmit media data such as audio or video, formalized media file format may be defined. In some embodiments, the media file according to the present invention may have a file format based on ISO base media file format (ISO BMFF).

The media file according to the present invention may include at least one box. Here, the box may be a data block or object including media data or metadata related to media data. Boxes may be an inter-hierarchical structure and, thus, media may be classified according to the inter-hierarchical structure such that a media file has a format appropriate to store and/or transmit large-scale media data. The media file may have a structure for easily accessing media information, for example, a structure for permitting a user to move a specific point of media content.

The media file according to the present invention may include a ftyp box, a moov box, and/or a mdat box.

The ftyp box (file-type box) may provide a file type or compatibility related information of a corresponding media file. The ftyp box may include configuration version information of media data of a corresponding media file. A decoder may identify a corresponding media file with reference to the ftyp box.

The moov box (movie box) may be a box including metadata of media data of a corresponding media file. The moov box may function as a container of all metadata. The moov box may be a box of an uppermost layer among metadata related boxes. In some embodiments, only one moov box may be present in a media file.

The mdat box (media data box) may be a box containing actual media data of a corresponding media file. The media data may include an audio sample and/or video samples and the mdat box may function as a container containing the media samples.

In some embodiments, the aforementioned moov box may further include a mvhd box, a trak box, and/or a mvex box as a lower box.

The mvhd box (movie header box) may include media presentation related information of media data included in a corresponding media file. That is, the mvhd box may include information such as media generation time, change time, time interval, period, etc. of corresponding media presentation.

The trak box (track box) may provide information related to a track of corresponding media data. The trak box may include information such as stream related information, presentation related information, and access related information of an audio track or a video track. A plurality of trak boxes may be present according to the number of tracks.

In some embodiments, the trak box may further include a tkhd box (track header box) as a lower box. The tkhd box may include information on a corresponding track indicated by the trak box. The tkhd box may include information such as generation time, change time, and track identifier of a corresponding track.

The mvex box (movie extend box) may indicate that the below-described moof box is present in a corresponding media file. To know all media samples of a specific track, moof boxes need to be scanned.

In some embodiments, the media file according to the present invention may be divided into a plurality of fragments (t14010). Thereby, the media file may be segmented and stored or transmitted. Media data (mdat box) of the media file may be segmented into a plurality of fragments and each fragment may include a moof box and the segmented mdat box. In some embodiments, to use fragments, information of the ftyp box and/or the moov box may be required.

The moof box (movie fragment box) may provide metadata of media data of a corresponding fragment. The moof box may be a box of an uppermost layer among metadata related boxes of a corresponding fragment.

The mdat box (media data box) may include actual media data as described above. The mdat box may include media samples of media data corresponding to each corresponding fragment.

In some embodiments, the aforementioned moof box may include a mfhd box and/or a traf box as a lower box.

The mfhd box (movie fragment header box) may include information related to a relationship of a plurality of fragmented fragments. The mfhd box may include a sequence number and may indicate a sequence of data obtained by segmenting media data of a corresponding fragment. Whether segmented data is omitted may be checked using the mfhd box.

The traf box (track fragment box) may include information on a corresponding track fragment. The traf box may provide metadata of a segmented track fragment included in a corresponding fragment. The traf box may provide metadata to decode/reproduce media samples in a corresponding track fragment. A plurality of traf boxes may be present according to the number of track fragments.

In some embodiments, the aforementioned traf box may include a tfhd box and/or a trun box as a lower box.

The tfhd box (track fragment header box) may include header information of a corresponding track fragment. The tfhd box may provide information of a basic sample size, period, offset, and identifier with respect to media samples of a track fragment indicated by the aforementioned traf box.

The trun box (track fragment run box) may include corresponding track fragment related information. The trun box may include information such as a period, size, and reproduction time for each media sample.

The aforementioned media file and fragments of the media file may be processed and transmitted as segments. The segment may include initialization segment and/or media segment.

A file according to the illustrated embodiment t14020 may be a file containing information related to initialization of a media decoder except for media data. The file may correspond to, for example, the aforementioned initialization segment. The initialization segment may include the aforementioned ftyp box and/or moov box.

A file according to the illustrated embodiment t14030 may be a file containing the aforementioned fragment. The file may correspond to, for example, the aforementioned media segment. The media segment may include the aforementioned moof box and/or mdat box. The media segment may further include a styp box and/or a sidx box.

The styp box (segment type box) may provide information for identifying media data of a segmented fragment. The styp box may perform the same function as the aforementioned ftyp box with respect to the segmented fragment. In some embodiments, the styp box may have the same format as the ftyp box.

The sidx box (segment index box) may provide information indicating an index of a segmented fragment. Thereby, the box may indicate a sequence of the corresponding segmented fragment.

In some embodiments (t14040), a ssix box may be further included and the ssix box (sub segment index box) may be further segmented into sub segments and, in this case, may provide information indicating an index of the sub segment.

Boxes of a media file may include further extended information based on the box and FullBox form shown in the illustrated embodiment t14050. In this embodiment, a size field and a largesize field may indicate a length of a corresponding box in units of bytes. The version field may indicate a version of a corresponding box format. The type field may indicate a type and identifier of a corresponding box. The flags field may indicate a flag, etc. related to a corresponding box.

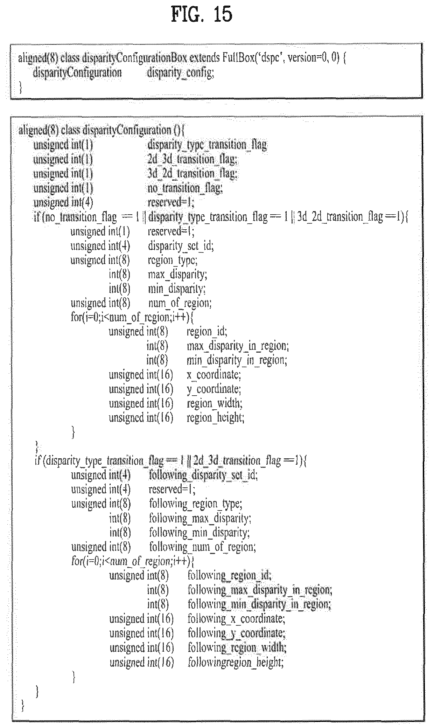

FIG. 15 is a diagram showing a disparity configuration box for providing disparity information of 3D content according to an embodiment of the present invention. The present invention proposes a method of storing and signaling a disparity related parameter associated with a video track (stream), samples, or the like when an ISO Base Media File Format (hereinafter, ISOBMFF)-based file, etc. are generated. The disparity parameter associated with the video track, samples, or the like included in the ISOBMFF may be indicated in the form of a box shown in the drawing. The illustrated example is the case in which transition of a disparity type or transition between 2D/3D occurs only once in each video track, sample, or the like in the case of transition of a disparity type or when transition between 2D/3D occurs. That is, when one of three types of transition flags that will be described below has a true value, the other transition flags have only a false value.

To provide disparity information associated with a video track and video samples in a media file, the disparity configuration box may be defined. The disparity configuration box may be positioned in a media file. In the illustrated example, when transition occurs, transition occurs only once in each video track, sample, or the like. That is, when one of three transition flags has a true value, the other transition flags have only a false value. In some embodiments, the disparity configuration box may be included in a moov box, a moof box, or a third box. The disparity configuration box may be referred to as a dspc box.

The disparity_config box may be configured in the form of a disparity configuration box. The disparity_config box may include a disparity_type_transition_flag field, a 2d_3d_transition_flag field, a 3d_2d_transition_flag field, a no_transition_flag field, a disparity_set_id field, a region_type field, a max_disparity field, a min_disparity field, a num_of_region field, a region_id field, a max_disparity_in_region field, a min_disparity_in_region field, an x_coordinate field, a y_coordinate field, a region_width field, a region_height field, a following_disparity_set_id field, a following_region_type field, a following_max_disparity field, a following_min_disparity field, a following_num_of_region field, a following_region_id field, a following_max_disparity_in_region field, a following_min_disparity_in_region field, a following_x_coordinate field, a following_y_coordinate field, a following_region_width field, and/or a followingregion_height. In this specification, a field included in each box may be referred to as an attribute.

The disparity_type_transition_flag field may indicate whether transition of a disparity type occurs. The disparity_type_transition_flag field may be a flag that is signaled to be true to indicate a sample, a sample group, a stream, or the like including new disparity information including different parameters when all and/or some of disparity related parameters (max_disparity, min_disparity, or region configuration and min/max disparity value, etc.) are changed.

The 2d_3d_transition_flag field may be flag information indicating that transition of a video track or a video sample occurs from 2D to 3D.

The 3d_2d_transition_flag field may be flag information indicating that transition of a video track or a video sample occurs from 3D to 2D.

The no_transition_flag field may be flag information indicating that a video track or a video sample is currently 3D and there is no transition.

The disparity_set_id field may be a field indicating an identifier of a disparity set. The disparity_set_id field may be an identifier indicating an id of a disparity set. Here, the disparity set may indicate a set of new disparity parameters when transition of disparity type or transition between 2D/3D occurs.

The region_type field may indicate a type of a region included in a sample. For example, in the case of a multi-region, the field may indicate a shape/number of division of a region type. Here, the field may also include a region type, a region of which is not divided. In this case, a fixed region may have the same value as a multi_region_disparity_length field of TS 101 154. Alternatively, the fixed region may indicate a position by dividing a picture with a predetermined size based on cell resolution. As necessary, in the case of an arbitrary region, it is necessary to additionally signal a coordinate value/resolution. The meaning of the region_type field according to a setting value will be described below.

region_type
0 - no disparity information is to be delivered
1 - Prohibited
2 - one minimum_disparity_in_region is coded as representing the minimum value in overall picture
   (see figure B.3 in DVB A157)
3 - two vertical minimum_disparity_in_regions are coded (see figure B.4 in DVB A157)
4 - three vertical minimum_disparity_in_regions are coded (see figure B.5 in DVB A157)
5 - four minimum_disparity_in_regions are coded (see figure B.6 in DVB A157)
6 to 9 - reserved for future use
10 - nine minimum_disparity_in_regions are coded (see figure B.7 in DVB A157)
11 to 16 - reserved for future use
17 - sixteen minimum_disparity_in_regions are coded (see figure B.2 in DVB A157)
18 - arbitrary region
19 to 255 - reserved for future use

The max_disparity field may indicate a maximum disparity value. The max_disparity field may indicate a maximum disparity value in one video sample or refers to a largest value among maximum disparity values of samples included in a sample group and/or a video track (stream) ([-128, +127] range).

The min_disparity field may indicate a minimum disparity value. The min_disparity field may indicate a minimum disparity value in one video sample or refers to a smallest value among minimum disparity values included in samples included in a sample group and/or a video track (stream) ([-128, +127] range). This is information required to overlay graphics, etc. on 3D content.

The num_of_region field may indicate the number of divided regions in the case of an arbitrarily configured region. Alternatively, in the case of a fixed region, when the region_type field complies with a multi_region_disparity_length value of TS 101 154, the field may redundantly indicate the number of divided regions.

The region_id field may indicate an identifier of a current region. In the case of one region that is not divided, the region_id may not be necessary. When a region is divided, the field may include region_id and may constitute all samples. The region_id may be mapped using an order/method for division in the region_type.

The max_disparity_in_region field may indicate a maximum disparity value of a corresponding region in one video sample or indicate a largest value among maximum disparity values of a current region of samples included in a sample group and/or a video track (stream). In this case, the value may be smaller than or equal to a value of the max_disparity field.

The min_disparity_in_region field may indicate a minimum disparity value of a corresponding region in one video sample or indicate a smallest value among minimum disparity values of a current region of samples included in a sample group and/or a video track (stream). In this case, the value may be equal to or greater than a value of the min_disparity field.

The x_coordinate field may be x coordinate indicating a start point of a region in the case of a multi-region obtained by arbitrarily dividing a region of included sample(s).

The y_coordinate field may be y coordinate indicating a start point of a region in the case of a multi-region obtained by arbitrarily dividing a region of included sample(s).

The region_width field may refer to a width value using x_coordinate as a start point in the case of a multi-region obtained by arbitrarily dividing a region of included sample(s).

The region_height field may refer to a height value using y_coordinate as a start point in the case of a multi-region obtained by arbitrarily dividing a region of included sample(s).

The num_of_disparity_set field may refer to the number of disparity sets.

The fields that have been described thus far may indicate information of a current disparity set. On the other hand, following_xx fields that will be described below may indicate information of a next disparity set. The following_disparity_set_id field, the following_region_type field, the following_max_disparity field, the following_min_disparity field, the following_num_of_region field, the following_region_id field, the following_max_disparity_in_region field, the following_min_disparity_in_region field, the following_x_coordinate field, the following_y_coordinate field, the following_region_width field, and the following_region_height field may have the same meaning as the disparity_set_id field, the region_type field, the max_disparity field, the min_disparity field, the num_of_region field, the region_id field, the max_disparity_in_region field, the min_disparity_in_region field, the x_coordinate field, the y_coordinate field, the region_width field, and the region_height field, which have been described above, respectively. Here, when the disparity_type_transition_flag field is true, the field may include all of the aforementioned following_xx fields. This may mean that a disparity related parameter value is changed in a current video track/sample group/sample entry and may be a value in the same video track/sample group/sample entry. Alternatively, this may mean that a disparity related parameter is changed in a subsequent video track/sample group/sample entry/sample and may be a disparity related parameter value of a next video track/sample group/sample entry/sample that is not related to a current video track/sample group/sample entry/sample.

A target described by these fields may be a video track in a media file, a video sample group, or each video sample. According to a described target, a range of description of each field may be changed. For example, the disparity_type_transition_flag field may indicate whether new disparity information is included in a corresponding video track, whether new disparity information is included in a corresponding video sample group, or whether new disparity information is included in one video sample.

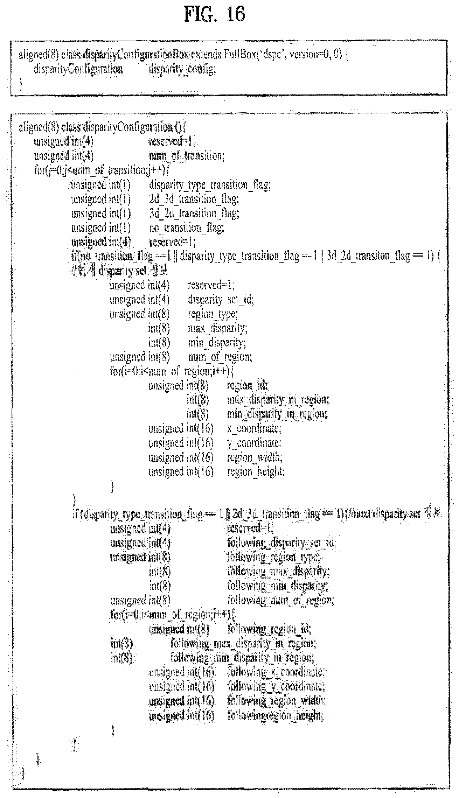

FIG. 16 is a diagram showing a disparity configuration box for providing disparity information of 3D content according to another embodiment of the present invention. The present invention proposes a method of storing and signaling a disparity related parameter associated with a video track (stream), a sample group, or the like when an ISO Base Media File Format (hereinafter, ISOBMFF)-based file, etc. are generated. The disparity parameter associated with the video track, sample group, or the like included in the ISOBMFF may be indicated in the form of a box shown in the drawing. The illustrated example is the case in which transition of a disparity type or transition between 2D/3D occurs a plurality of times in each video track, a sample group, or the like in the case of transition of a disparity type or when transition between 2D/3D occurs. Description of the illustrated fields is the same as the description of the previous drawings. However, the num_of_ transition field may refer to a number of times that transition of disparity type or transition between 2D/3D occurs. Information on every transition may include current and/or next disparity set information.

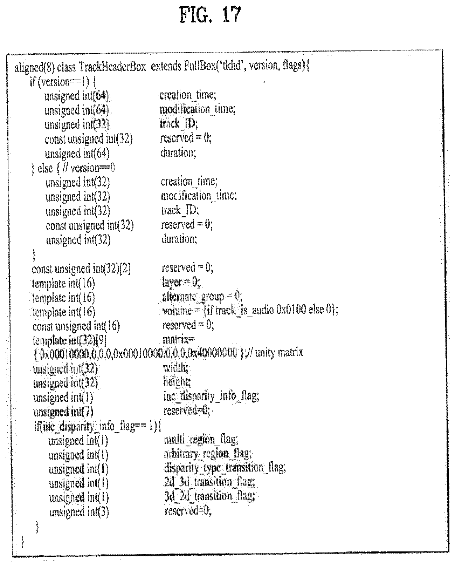

FIG. 17 is a diagram showing a method of defining disparity information in a tkhd box according to an embodiment of the present invention. Disparity information may be stored/transmitted in the aforementioned media file structure itself. In the present embodiment, disparity information may be added to a TrackHeader (tkhd) box in the aforementioned moov box.

In the illustrated embodiment, the inc_disparity_info_flag field may be a flag indicating whether 3D video that requires disparity related information is included in a video track. When a value of the corresponding field is 1, this may indicate that 3D video that requires disparity related information is included in a corresponding video track and, otherwise, the value may be 0. The multi_region_flag field may indicate whether a sample in a video track is divided into regions. When the sample is divided into regions, the value may be 1 and, when the sample is not divided into regions, the value may be 0. The arbitrary_region_flag field may be a flag indicating whether a region of a video sample included in a video track is arbitrarily divided. In the case of false, a region of a video sample included in a video track may be divided using a predetermined method. When the region is not divided, the region may be signaled as a false value. The disparity_type_transition_flag field may be a flag that is signaled to be true to indicate as including new disparity information including different parameters when all and/or some of disparity related parameters (max_disparity, min_disparity, or region configuration and min/max disparity value, etc.) in a video track are changed. The 2d_3d_transition_flag field may be flag information indicating that transition of video included in a video track occurs from 2D to 3D. The 3d_2d_transition_flag field may be flag information indicating that transition of video included in a video track occurs from 3D to 2D.

As described above, each field may be included in a track header box and may signal disparity information of a corresponding track.

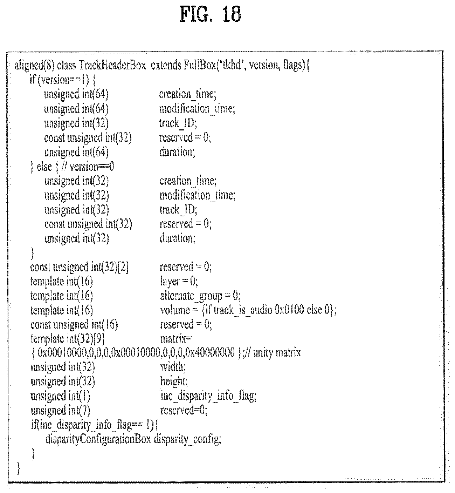

FIG. 18 is a diagram showing a method of adding disparity configuration box including disparity related information to a track header box according to an embodiment of the present invention. A disparity configuration box (disparityConfigurationBox) including detailed information of a disparity related parameter may be included in a 'tkhd' box included in a moov box of ISOBMFF. The track header box may further include an inc_disparity_info_flag field and a disparity configuration box in addition to existing information. The inc_disparity_info_flag field may be a flag indicating whether 3D video that requires disparity related information is included in a video track. When a value is 1, this may indicate that video that requires disparity related information is included in a video track and, in this case, a disparity configuration box (disparityConfigurationBox) is included in the 'tkhd' box. The disparity_config box in the form of disparity configuration box may include disparity-related detailed parameter of 3D video included in a video track. In this case, among attributes in a disparity_config box as a disparity configuration box, the following attribute may have the same meaning as in the above proposal. The max_disparity field may indicate a largest value of maximum disparity values of a video sample included in a video track. The min_disparity field may indicate a smallest value of minimum disparity values of a video sample included in a video track. The max_disparity_in_region field may indicate a largest value of maximum disparity values in a corresponding region of samples included in a video track. The min_disparity_in_region field may indicate a smallest value of maximum disparity values in a corresponding region of samples included in a video track. Definition of these fields is the same as in the above description but, in the present embodiment, a disparity configuration box (disparityConfigurationBox) is present in a track header (tkhd) box and, thus, these fields may describe information of a corresponding video track.

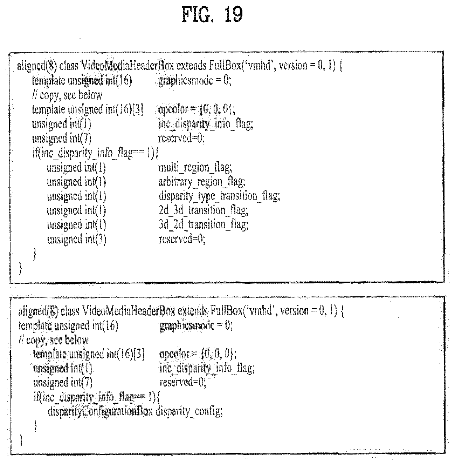

FIG. 19 is a diagram showing a method of defining disparity information in a video media header (vmhd) box according to an embodiment of the present invention.

As described above, disparity information may be stored/transmitted in the media file structure itself. In the present embodiment, disparity information (parameters) may be added to a vmhd box in the aforementioned trak box.

Here, the vmhd box (video media header box) may be a lower box of the aforementioned trak box and may provide general presentation related information of a corresponding video track.

In the embodiment illustrated in an upper diagram, the vmhd box may include an inc_disparity_info_flag field. A description of a corresponding field may be the same as in the above description. According to a value of the inc_disparity_info_flag field, the multi_region_flag field, the arbitrary_region_flag field, the disparity_type_transition flag field, the 2d_3d_transition_flag field, and/or the 3d_2d_transition_flag field may be further included. These fields may perform the same function as the fields with the same name in the aforementioned tkhd box.

In the embodiment illustrated in a lower diagram, the vmhd box may include an inc_disparity_info_flag field. According to a value of the inc_disparity_info_flag field, a disparity_config box as a disparity configuration box (disparityConfigurationBox) may be further included. The inc_disparity_info_flag field and the disparity_config box may perform the same functions as those with the same names in the aforementioned tkhd box. That is, in the illustrated embodiments, disparity information in the vmhd box may provide disparity information on video data included in a corresponding video track.

In some embodiments, the tkhd box and the vmhd box may simultaneously include disparity related information. In this case, embodiments of a disparity information structure included in each box may be combined with each other. When the tkhd box and the vmhd box include disparity information values of disparity information defined in the tkhd box may be overridden by values of disparity information defined in the vmhd box. That is, when values of disparity information defined in both of the boxes are different, a value of the vmhd box may be used. When disparity information is not included in the vmhd box, disparity information in the tkhd box may be used.

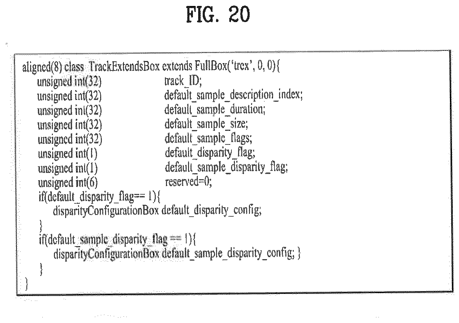

FIG. 20 is a diagram showing a method of defining disparity information in a trex box according to an embodiment of the present invention.

Disparity information may be stored/transmitted in the aforementioned media file structure itself. In the present embodiment, disparity information (parameters) may be added to track extends (trek) box in the aforementioned movie extends (mvex) box.

Here, the trex box (track extends box) may be a lower box of the aforementioned mvex box and may set up default values used by each movie fragment. The box may provide a default value to reduce a space and complexity in the traf box.

The trex box may further include a default_disparity_flag field and/or a default_sample_disparity_flag field. According to a value of the default_disparity_flag field, a default_disparity_config box as a disparity configuration box may be further included. According to a value of the default_sample_disparity_flag field, a default_sample_disparity_config box as a disparity configuration box may be further included. Each field included in the disparity configuration box will be defined below.

The default_disparity_flag field may be a flag indicating whether 3D data that requires disparity related information is included in a video track fragment included in a corresponding fragment. When a value of the field is 1, this may indicate that 3D video data that requires disparity related information is included by default in a corresponding fragment. In this case, the field may include a disparity configuration box, etc. including detailed information of a disparity related parameter that is commonly applied to video samples of a corresponding track fragment. When a value of the field is 1, a default_disparity_config box as a disparity configuration box may be further included.

The default_disparity_config box may include a disparity-related detailed parameter of 3D video that requires disparity related information included in a track fragment of a movie fragment. In this case, attributes among attributes in disparityConfiguration included in disparityConfigurationBox except for the following attribute may have the same meaning as the above proposal. disparityConfiguration included in disparityConfigurationBox except for the following attribute may have the same meaning as the above proposal. The max_disparity field may indicate a largest value of maximum disparity values of a video sample included in a track of a track fragment in a movie fragment. The min disparity field may indicate a smallest value of minimum disparity values of a video sample included in a track of a track fragment of a movie fragment. The max_disparity_in_region field may indicate a largest value of a maximum disparity value in a corresponding region of samples included in a track of a track fragment in a movie fragment. The min_disparity_in_region field may indicate a smallest value of minimum disparity values in a corresponding region of samples included in a track of a track fragment in a movie fragment.

The default_sample_disparity_flag field may be a flag indicating whether 3D video samples that require disparity related information are included in a video track fragment included in a movie fragment. When a value is 1, this may indicate that 3D video samples that require disparity related information are included by default in a video track of movie fragments and, in this case, the field may include disparityConfigurationBox, etc. including detailed information of a disparity parameter that is applied to each video sample of a track fragment.

The default_sample_disparity_config box may include a disparity-related detailed parameter that is separately applied to a 3D video sample that requires disparity related information included in a track fragment of a movie fragment. In this case, attributes among attributes in disparityConfiguration included in disparityConfigurationBox except for the following attribute may have the same meaning as the above proposal. The max_disparity field may indicate maximum disparity of each video sample included in a track of a track fragment in a movie fragment. The min_disparity field may indicate minimum disparity of each of video samples included in a track of a track fragment in a movie fragment. The max_disparity_in_region field may indicate maximum disparity in a corresponding region of each sample included in a track of a track fragment in a movie fragment. The min_disparity_in_region field may indicate minimum disparity in a corresponding region of each sample included in a track of a track fragment in a movie fragment.

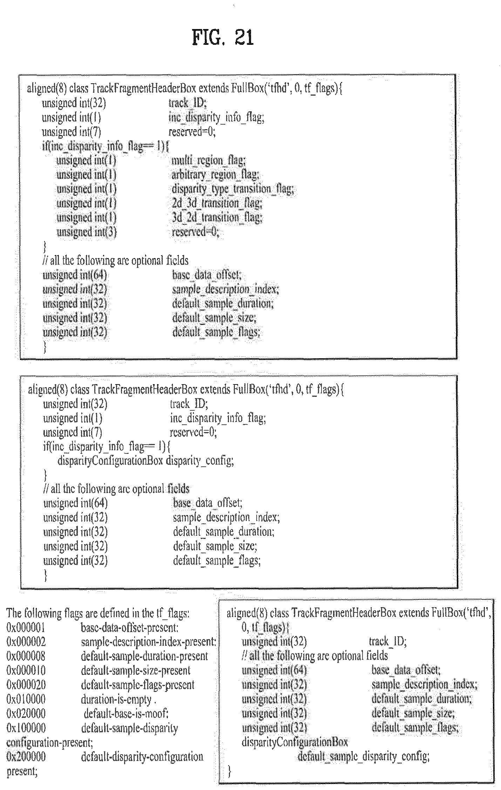

FIG. 21 is a diagram showing a method of defining disparity information in a track fragment header (tfhd) box according to an embodiment of the present invention.

As described above, disparity information may be stored/transmitted in the media file structure itself. In the embodiment illustrated in an upper drawing, disparity information (parameters) may be added to a tfhd box in the aforementioned moof box. The track fragment header box may include an inc_disparity_info_flag field, a multi_region_flag field, an arbitrary_region_flag field, a disparity_type_transition_flag field, a 2d_3d_transition_flag field, and/or a 3d_2d_transition_flag field. The inc_disparity_info_flag field may be a flag indicating whether a track fragment included in a movie fragment includes 3D video that requires disparity related information. When a value is 1, this may indicate that 3D video that requires disparity related information is included in a corresponding track fragment and, otherwise, the value may be 0. The multi_region_flag field may indicate whether a sample is divided into regions in a fragment track included in a movie fragment. When a sample is divided into regions, the value may be 1 and, when a sample is not divided into regions, the value may be 0. The arbitrary_region_flag field may be a flag indicating whether video included in a track fragment included in a movie fragment includes an arbitrarily divided region. In the case of false, a region may be divided using a predetermined method. When a sample is not divided into regions, the region may be signaled as a false value. The disparity_type_transition_flag field may be a flag indicating that video included in a track fragment included in a movie fragment is signaled to be true to indicate a track fragment included in a movie fragment including new parameter information including different parameters when all or some of disparity related parameters (max_disparity, min_disparity, or region configuration and min/max disparity value, etc.) are changed. The 2d_3d_transition_flag field may be a flag indicating that transition of video included in a track fragment included in a movie fragment occurs from 2D to 3D. The 3d_2d_transition_flag field may be a flag indicating that transition of video included in a track fragment included in a movie fragment occurs from 3D to 2D.

In the embodiment illustrated in an intermediate drawing, the tfhd box may include the aforementioned disparity configuration box. According to a value of the aforementioned inc_disparity_info_flag field, whether a disparity_config box as a disparity configuration box is included may be indicated. The disparity_config box may provide disparity information that can be commonly applied video samples of a corresponding track fragment. The disparity_config box may further include the following information. The disparity_config box may include a disparity related detailed parameter of 3D video included in a fragment track in a movie fragment. Attributes among attributes of disparity_config box as disparityConfigurationBox except for the following attribute may have the same meaning as the above proposal.

The max_disparity field may refer to a largest value among maximum disparity values of each video sample included in a track included in a track fragment in a movie fragment. The min_disparity field may refer to a smallest value among minimum disparity values of each video sample included in a track included in a track fragment in a movie fragment. The max_disparity_in_region field may indicate a maximum value of maximum disparity in a corresponding region of each video sample included in a track included in a track fragment in a movie fragment. The min_disparity_in_region field may indicate a minimum value of minimum disparity in a corresponding region of each video sample included in a track included in a track fragment in a movie fragment.

In the embodiment illustrated in a lower drawing, the tfhd box may further include disparity information according to a value of tf_flags. tf_flags may indicate flags associated with a corresponding box. For example, when tf_flags includes a value of 0x000001, this may indicate that base data offset information is included in the tfhd box and, when tf_flags includes a value of 0x000002, this may indicate that sample description index information is included in the tfhd box.

In some embodiments, when a value of tf_flags includes 0x100000 (0x100000: default-sample-disparity-configuration-present), this may indicate that a default value of disparity information of video samples included in a track fragment in a corresponding fragment is present. In some embodiments, a value of tf flags indicating that disparity information is present may have a different value other than 0x100000. That is, in some embodiments, when a value of tf_flags includes 0x200000 (0x200000: default-disparity-configuration-present), this may indicate that a default value of disparity information associated with all video included in a track fragment in a corresponding fragment is present.

In other words, when tf_flags includes a value of 0x100000, the tfhd box may include a default_sample_disparity_config box as a disparity configuration box and, when tf flags includes a value of 0x200000, the tfhd box may include a default_disparity_config box. The default_sample_disparity_config box may include a default disparity parameter that is separately applicable to 3D video samples including disparity information included in a track fragment of a movie fragment. The default_disparity_config box may include a default disparity parameter that can be applied to all 3D video including disparity information included in a track fragment of a movie fragment.

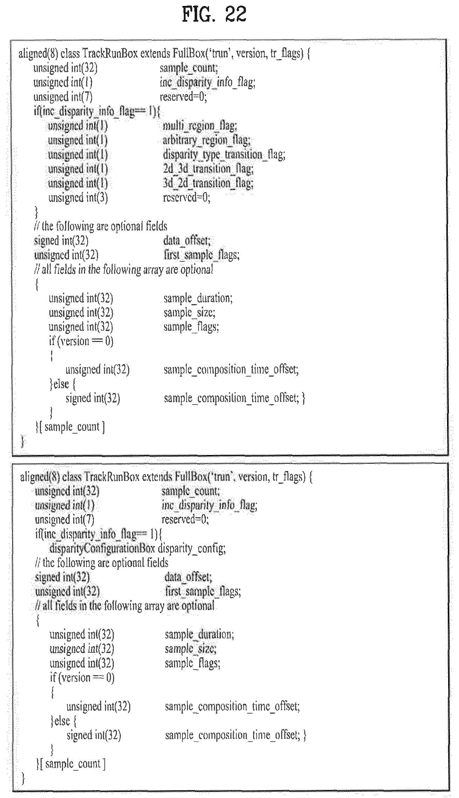

FIG. 22 is a diagram showing a method of defining disparity information in track run (trun) box according to an embodiment of the present invention.

Disparity information may be stored/transmitted in the aforementioned media file structure itself. In the present embodiment, disparity information (parameters) may be added to a trun box in the aforementioned traf box.

In the embodiment illustrated in an upper drawing, the trun box may include an inc_disparity_info_flag field. According to a value of the inc_disparity_info_flag field, a multi_region_flag field, an arbitrary_region_flag field, a disparity_type_transition_flag field, a 2d_3d_transition_flag field, and/or a 3d_2d_transition_flag field may be further included. These fields may signal disparity related items that are commonly applicable to video samples in a corresponding track fragment. These fields may have the same meaning as the fields with the same name in the aforementioned tfhd box.

In some embodiments, the tfhd box and the trun box may simultaneously include disparity information. In this case, embodiments of a disparity information structure included in each box may be combined with each other. When the tfhd box and the trun box simultaneously include disparity information, values of disparity information defined in the tfhd box may be overridden by values of disparity information defined in the trun box, That is, when values of the disparity information defined in both of the boxes are different, the value in the trun box may be used. When disparity information is not included in the trun box, the disparity information in the tfhd box may be used.

In the embodiment illustrated in a lower drawing, the trun box may include an inc_disparity_info_flag field and, according to a value of the inc_disparity_info_flag field, a disparity_config box as a disparity configuration box may be further included. The box may include disparity information that is commonly applicable to video samples in a corresponding track fragment. Fields in the box may have the same meaning as the fields or attributes with the same name of a disparity configuration box in the aforementioned tfhd box.

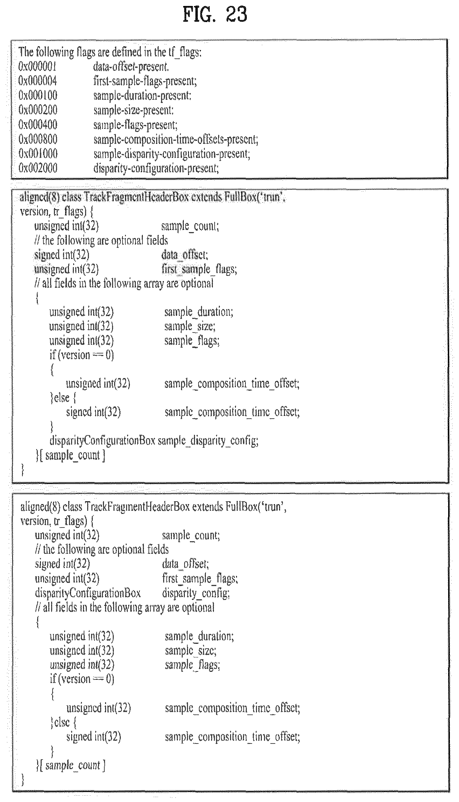

FIG. 23 is a diagram showing a method of defining disparity information in a track run (trun) box according to another embodiment of the present invention. In the illustrated embodiment, the trun box is present in a track fragment box in a movie fragment.

In the embodiment illustrated in an upper drawing, the trun box may further include disparity information according to a value of tr_flags. tr_flags may indicate flags associated with a corresponding box. For example, when tr_flags includes a value of 0x000001, this may indicate that data offset information is included in the trun box and, when tr_flags includes a value of 0x000004, this may indicate that first sample flag information is included in the trun box.

When tr_flags includes a value of 0x001000, this may indicate that a sample disparity configuration box is included in the trun box. As shown in an intermediate drawing, a disparity related parameter corresponding to each sample may be signaled. Attributes among attributes of a disparity configuration box included in the trun box except for the following attribute may have the same meaning as attributes of the disparity configuration box proposed in the track fragment header. The max_disparity field may indicate maximum disparity of each video sample. The min_disparity field may indicate minimum disparity of each video sample. The max_disparity_in_region field may indicate maximum disparity in a corresponding region of each video sample. The min_disparity_in_region field may indicate minimum disparity in a corresponding region of each video sample.

In some embodiments, when tr_flags includes a value of 0x002000, this may indicate whether disparity information that is commonly applicable to video samples included in a track fragment in a corresponding fragment is present. In some embodiments, a value of tr_flags indicating that disparity information is present may have a different value other than 0x002000 (0x002000: disparity-configuration-present).

As illustrated in the lower drawing, when tr_flags includes a value of 0x002000, disparity configuration box (disparityConfigurationBox) may be included in a trun box. In this case, attributes of the included disparity configuration box may have the same meaning as attributes of the disparity configuration box proposed in the aforementioned track fragment header. The max_disparity field may refer to a largest value among maximum disparity values of video samples included in a track fragment. The min_disparity field may refer to a smallest value among minimum disparity values of video samples included in a track fragment. The max_disparity_in_region field may indicate a maximum value of maximum disparity in a corresponding region of each video sample. The min_disparity_in_region field may indicate a minimum value of minimum disparity in a corresponding region of each video sample.

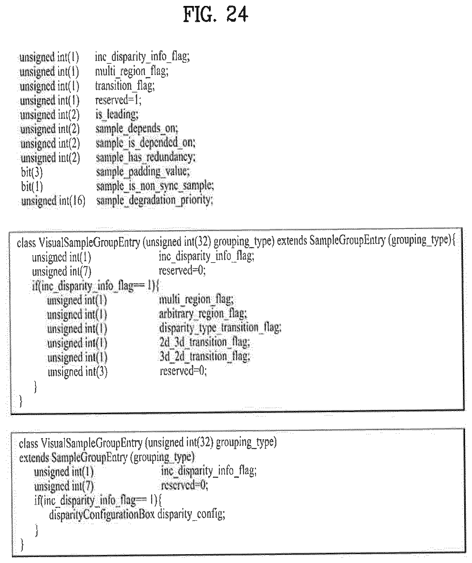

FIG. 24 is a diagram showing a method of defining disparity information in various flags or sample group entries according to an embodiment of the present invention.

In the embodiment illustrated in an upper drawing, the illustrated disparity related flags may be added onto default_sample_flags in a trex box, default_sample_flags in a tfhd box, sample_flags in a trun box, and/or first_sample_flags in a trun box. These flags may refer to a combination of flags and include a plurality of pieces of flag information.

First, an inc_disparity_info_flag field may be included onto each flag. The inc_disparity_info_flag field may be a flag indicating whether a current video sample is a 3D video sample that requires disparity related information. When a value of the inc_disparity_info_flag is 1, this may indicate that a corresponding sample is a 3D video sample that requires disparity related information. The multi_region_flag field may indicate whether a current sample is divided into regions. When a current sample is divided into regions, the value may be 1 and, when the current sample is not divided into regions, the value may be 0. The transition_flag field may be a flag indicating that transition of a subsequent video sample of a current video sample occurs between 2D/3D or disparity types.

In the embodiment illustrated in an intermediate drawing, disparity information may be included in a visual sample group entry. When the same disparity related flag is applicable to one or more video samples present in one media file or movie fragment, the same disparity flags as in the illustrated embodiment may be further included in a visual sample group entry.

The illustrated disparity related flags have the same meaning as the aforementioned flags with the same names but, in this case, may describe a corresponding sample group. That is, the inc_disparity_info_flag field may be a flag indicating whether a sample group is a 3D video sample group that requires disparity related information. When a value is 1, this may indicate that a corresponding sample group is a 3D video sample group that requires disparity related information. The multi_region_flag field may indicate whether a current sample group is divided into regions. When a current sample group is divided into regions, the value may be 1 and, when the current sample group is not divided into regions, the value may be 0. The arbitrary_region_flag field may be a flag indicating whether a current sample group is divided into arbitrary regions. In the case of false, a current sample group may be divided into regions using a predetermined method. When the current sample group is not divided into regions, the arbitrary_region_flag may be signaled as a false value. The disparity_type_transition_flag field may be a flag that is signaled to be true to indicate that new disparity information including different parameters is applicable to a next video sample group when all or some of disparity related parameters (max_disparity, min_disparity, or region configuration and min/max disparity value, etc.) associated with a subsequent video sample group are changed. The 2d_3d_transition_flag field may be a flag indicating that a current video sample group is 2D and transition of a subsequent video sample group occurs to 3D. The 3d_2d_transition_flag field may be a flag indicating that a current video sample group is a last 3D sample and transition of a subsequent video sample group occurs to 2D.

In the embodiment illustrated in a lower drawing, disparity information may be included in a visual sample group entry. When the same disparity information (parameter) is applicable to one or more video samples present in one media file or fragment, an inc_disparity_info_flag field and a disparity configuration box may be further included in a visual sample group, as in the illustrated embodiment.

The inc_disparity_info_flag field may be a flag indicating whether 3D video that requires disparity related information, which is commonly applicable to sample groups, is included. When a value of the inc_disparity_info_flag field is 1, this may indicate that 3D video that requires disparity related information, which is commonly applicable to sample groups, is included. The disparity configuration box (disparity_config) may include a disparity-related detailed parameter of 3D video that is commonly applicable to sample groups. Attributes among attributes in disparity_config as a disparity configuration box except for the following attribute may have the same meaning as the above proposal. The max_disparity field may refer to a largest value among maximum disparity values of video samples included in sample groups. The min_disparity field may refer to a smallest value of minimum disparity values of video samples included in sample groups. The max_disparity_in_region field may indicate a largest value of maximum disparity values of a current region of samples included in a sample group. In this case, this value may be smaller than or equal to a value of max_disparity. The min_disparity_in_region field may indicate a smallest value of minimum disparity values of a current region of samples included in a sample group. In this case, the value may be equal to or greater than a value of min_disparity.

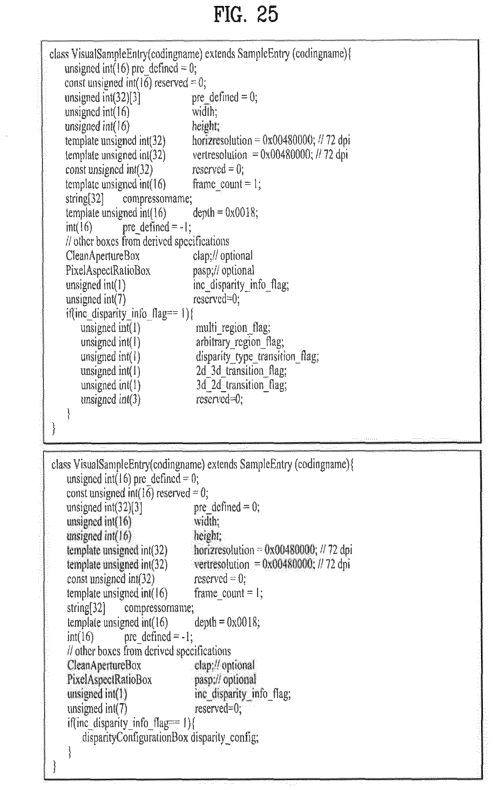

FIG. 25 is a diagram showing a method of defining disparity information in a visual sample entry according to an embodiment of the present invention. As illustrated in an upper drawing, as initialization information required to decode each of samples present in one media file or movie fragment, disparity related flag information associated with each sample, etc. may be further included in a visual sample entry (visual sample entry()).

The inc_disparity_info_flag field may be a flag indicating whether associated video track/sample, etc. include 3D video that requires disparity related information. When a value of the inc_disparity_info_flag field is 1, this may indicate that the associated video track/sample, etc. include 3D video that requires disparity related information and, otherwise, the value may be 0. The multi_region_flag field may indicate whether the associated video track/sample, etc. is a sample divided into regions. When a sample is divided into regions, the value may be 1 and, when a sample is not divided into regions, the value may be 0. The arbitrary_region_flag field may be a flag indicating whether the associated video track/sample, etc. is a sample that is arbitrarily divided into regions. In the case of false, the associated video track/sample, etc. are divided into regions using a predetermined method. When the sample is not divided into regions, the region may be signaled as a false value. The disparity_type_transition_flag field may be a flag that is signaled to be true to indicate that the associated video track/sample, etc. are the associated video track/sample, etc. including new disparity information including different parameters when all or some of disparity related parameters (max_disparity, min_disparity, or region configuration and min/max disparity value, etc.) are changed. The 2d_3d_transition_flag field may be a flag indicating that transition of the associated video track/sample, etc. occurs from 2D to 3D. The 3d_2d_transition_flag field may be a flag indicating that transition of the associated video track/sample, etc. occurs from 3D to 2D.

As illustrated in a lower drawing, as initialization information that is required to decode each sample present in one media file or movie fragment, a disparity related parameter associated with each sample, etc. may be included in a visual sample entry. As illustrated in the drawing, the inc_disparity_info_flag field may be a flag indicating whether the associated video track/sample, etc. include 3D video that requires disparity related information. When a value is 1, this may indicate that the associated video track/sample, etc. include 3D video that requires disparity related information and, otherwise, the value may be 0. The disparity_config box may be a disparity configuration box and may include a disparity-related detailed parameter of 3D video associated with the associated video track/sample, etc. Attributes in the disparity_config box as a disparity configuration box may have the same meaning as in the above description of the disparity_config box.

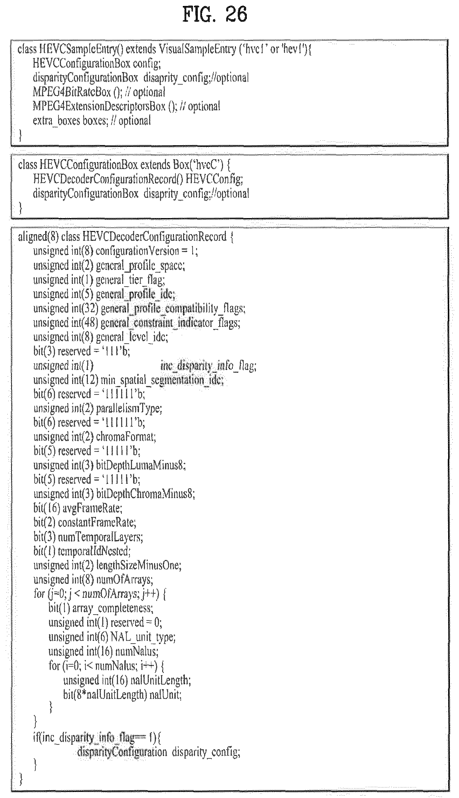

FIG. 26 is a diagram showing a method of defining disparity information in an HEVC sample entry, an HEVC configuration box, or an HEVC decoder configuration record according to an embodiment of the present invention.

In the embodiment illustrated in an upper drawing, disparity information may be included in an HEVC sample entry (HEVCSampleEntry). This may be initialization information required to decode each HEVC sample present in one media file or movie fragment and disparity information related to each HEVC sample, etc. may be added to the information, as illustrated in the drawing. In some embodiments, the added disparity information may be added in the form of the aforementioned disparity configuration box. In some embodiments, the disparity information may be added to HEVCLHVCSampleEntry, LHEVCSampleEntry, HEVCTileSampleEntry, LHEVCTileSampleEntry, AVCSampleEntry, AVC2SampleEntry, SVCSampleEntry, MVCSampleEntry, etc. in the same way.

In the embodiment illustrated in an intermediate drawing, the disparity information may be included in an HEVC configuration box (HEVCConfigurationBox). This may be initialization information required to decode each HEVC sample present in one media file or movie fragment and display information related to each HEVC sample, etc. may be added to the information, as illustrated in the drawing. In some embodiments, the added disparity information may be added in the form of the aforementioned disparity configuration box. In some embodiments, the disparity information may be added to HEVCLHVCSampleEntry, LHEVCSampleEntry, HEVCTileSampleEntry, LHEVCTileSampleEntry, AVCSampleEntry, AVC2SampleEntry, SVCSampleEntry, and/or MVCSampleEntry, etc. in the same way.

In the embodiment illustrated in a lower drawing, the disparity information may be included in HEVC decoder configuration record (HEVCDecoderConfigurationRecord). This may be initialization information required to decode each HEVC sample present in a media file or a movie fragment and disparity information related to each HEVC sample, etc. may be added to the information, as illustrated in the drawing. In some embodiments, the added disparity information may be added in the form of the aforementioned disparity configuration box. In this case, whether disparity configuration box is added may be signaled by the inc_disparity_info_flag field. In some embodiments, the disparity information may be added to the HEVCLHVCSampleEntry, LHEVCSampleEntry, HEVCTileSampleEntry, LHEVCTileSampleEntry, AVCecoderConfigurationRecord, SVCecoderConfigurationRecord, and/or MVCecoderConfigurationRecord, etc. in the same way.

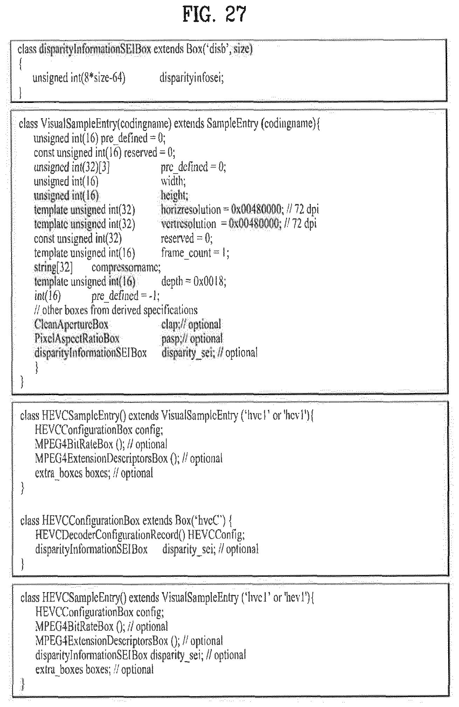

FIG. 27 is a diagram showing a method of defining a disparity information SEI box and storing/transmitting disparity information according to an embodiment of the present invention.

As illustrated in an upper drawing, the present invention may define a disparityInformationSEI box (disb). The box may include an SEI NAL unit and the SEI NAL unit may have an SEI message including disparity related information. The disparity information SEI box may also be referred to as a disb box.

In the embodiments illustrated in intermediate and lower drawings, the disparity information SEI box may be included in a visual sample entry, an HEVC configuration box, and/or an HEVC sample entry. In some embodiments, this may be included in an AVC sample entry, an MVC sample entry, an SVC sample entry, an HEVCLHVCSampleEntry, an LHEVCSampleEntry, an HEVCTileSampleEntry, and/or a LHEVCTileSampleEntry.

The method proposed according to the present invention may be applied when a file of content for supporting 3D video that requires disparity information is generated based on ISOBMFF or a DASH segment that is operable on MPEG DASH or an MPU that is operable on MPEG MMT is generated. In this regard, a decoder or the like of a receiver (which includes a DASH client, an MMT client, etc.) may effectively decode/display corresponding content based on disparity related metadata (flag, parameter, etc.). A disparity configuration box (disparityConfigurationBox) including the above proposed disparity related flag or disparity related parameter may be simultaneously present in a plurality of boxes in one ISOBMFF file, a DASH segment, or an MMT MPU. In this case, values of a disparity related flag or disparity parameter defined in a higher box may be overridden by values of a disparity related flag or disparity parameter defined in a lower box. For example, when disparity related flags and detailed parameters are simultaneously included in a track header (tkhd) box and a video media header (vmhd) box, values of flags defined in a track header (tkhd) box or attributes of a disparity configuration box may be overridden by values defined in a video media header (vmhd).

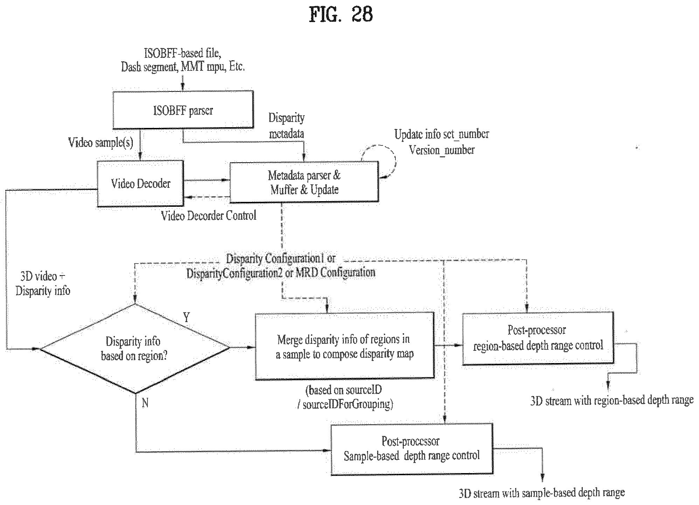

FIG. 28 is a diagram showing an operation of a media engine of a receiver based on disparity information processing capability according to an embodiment of the present invention.

A parser (ISOBMFF parser) of a receiver may parse an ISOBMFF-based media file, a DASH segment, and/or an MMT MPU, etc. According to a parsing result, video samples may be transmitted to a video decoder and disparity information (metadata) may be transmitted to a metadata parser. The ISOBMFF parser may be a hardware block and may be referred to as a parsing processor or a parsing circuit.

The video decoder may decode video samples to acquire 3D video data. When disparity information acquired in this procedure is present, the disparity information may be transmitted to a metadata parser. The metadata parser may parse the received disparity metadata. Here, control information, etc. required in a video decoder may be transmitted to a video decoder using the acquired metadata. The metadata parser may update a buffer and metadata. Update may be performed using set_number, version_number, etc. The video decoder and the metadata parser may be a hardware block and may be referred to as a decoding processor and a metadata parsing processor, respectively, or referred to as a decoding circuit and a metadata parsing circuit, respectively.

Next operations may be changed according to whether disparity information for each region is present. When disparity information based on a region in the parsed metadata is present, the preprocessor may merge disparity information of a plurality of regions included in one sample to compose a disparity map. That is, in a pre-processing operation, disparity information of all regions may be acquired based on disparity information for each region. Here, a merge operation of disparity information may be performed based on a source identifier (sourceID) or a source identifier for grouping (sourceIDForGrouping). Then, the post-processor may perform depth range control based on each region and apply different disparities to respective regions.

When disparity information based on a region is not present in parsed metadata, the post-processor may perform depth range control based on each sample and apply disparity for each sample.

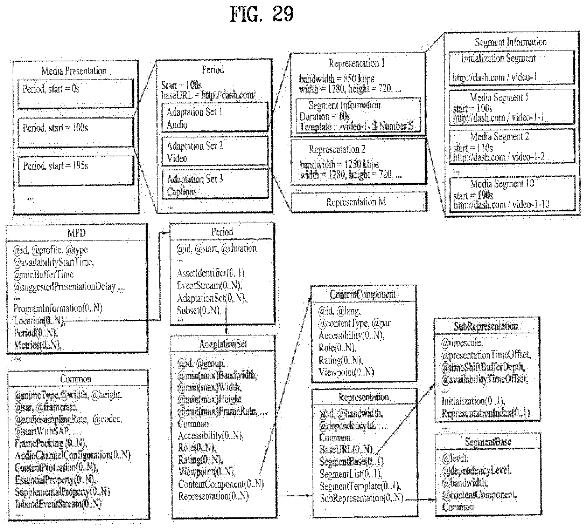

FIG. 29 is a diagram showing a dynamic adaptive streaming over HTTP (DASH) data model according to an embodiment of the present invention.

A transmission apparatus according to an embodiment of the present invention may signal disparity information in MPEG DASH such that a DASH-based client provides a 3D video service. That is, the transmission apparatus according to an embodiment of the present invention may signal display information of 3D video content. According to an embodiment of the present invention, signaling of disparity configuration information in a MPEG DASH may be applied to a DASH-based system. For example, signaling may be applied to ATSC 3.0, DVB IPTV, and DASG-based streaming systems, etc.

According to the DASH data model according to an embodiment of the present invention, MPD including information on media presentation may include information on one or more periods. One period may include information on one or more adaptation set. Information on one adaptation set may include information on one or more representations. Information on one representation may include information on one or more segments. Information on a segment may include information on an initialization segment and one or more media segments.

The embodiment shown in a lower drawing corresponds to a drawing for describing MPD in more detail.

The MPD may be represented by a relation of a Period element, an AdaptationSet element, a Representation element, a SubRepresentation element, a ContentComponent element, and/or a SegmentBase element. The MPD element may include @id, @profile, @type @availabilityStartTime, @minBufferTime @suggestedPresentationDelay, ProgramInformation(0..N), Location(0..N), Period(0..N), and/or Metrics(0..N). Here, the @profile and/or the @minBufferTime may be a mandatory field. The Period element may include @id, @start, @duration, AssetIdentifier(0..1), EventStream(0..N), AdaptationSet(0..N), and/or Subset(0..N). The AdaptationSet element may include @id, @group, @min(max)Bandwidth, @min(max)Width, @min(max)Height, @min(max)FrameRate, Common, Accessibility(0..N), Role(O..N), Rating(0..N), Viewpoint(0..N), ContentComponent(0..N), and/or Representation(0..N). The Representation element may include @id, @bandwidth, @dependencyId, Common, BaseURL(0..N), SegmentBase(0..1), SegmentList(0..1), SegmentTemplate(0..1), and/or SubRepresentation(0..N). Here, the @id and/or the @bandwidth may be a mandatory field. The SubRepresentation element may include @level, @dependencyLevel, @bandwidth, @contentComponent, and/or Common. The ContentComponent element may include @id, @lang, @contentType, @par, Accessibility(O..N), Role(O..N), Rating(0..N), and/or Viewpoint(0..N). Here, when @lang, @contentType, and/or @par are not present in AdaptationSet, these fields may or may not be defined in ContentComponent. The SegmentBase element may include @timescale, @presentationTimeOffset, @timeShiftBufferDepth, @availabilityTimeOffset, Initialization(0..1), and/or RepresentationIndex(0..1). The DASH data model according to an embodiment of the present invention may include a Common attribute and element. The Common attribute and element may include @mimeType,@width, @height, @sar, @framerate, @audiosamplingRate, @codec, @startWithSAP, FramePacking (0..N), AudioChannelConfiguration(0..N), ContentProtection(0..N), EssentialProperty(O..N), SupplementalProperty(O..N), and/or InbandEventStream(0..N). The aforementioned Common attribute and element may be applied in AdaptationSet, Representation, and/or SubRepresentation.

In the drawing and the above description, a field with @ attached to a front portion of a name thereof may indicate an attribute and a field without @ may indicate an element. (0..N) subsequent to a name of an element may indicate that a minimum value of 0 and a maximum value of N of corresponding elements are present. Here, N may indicate that there is no limitation. According to an embodiment of the present invention, description of element or attribute in MPD may comply with definition in the DASH standard. The MPD may be description of media presentation in order to provide a streaming service. Period may indicate an interval of media presentation. Sequential sequences of all periods may be included in a media presentation. Segment may indicate a unit of data associated with the URL described by the MPD and a byte range. Adaptation Set may indicate a set of exchangeable encoded versions of one or more media content components. Representation may refer to combination and encapsulation of one or more media streams in a transfer format. Sub-Representation may indicate a portion of the Representation described by the MPD.

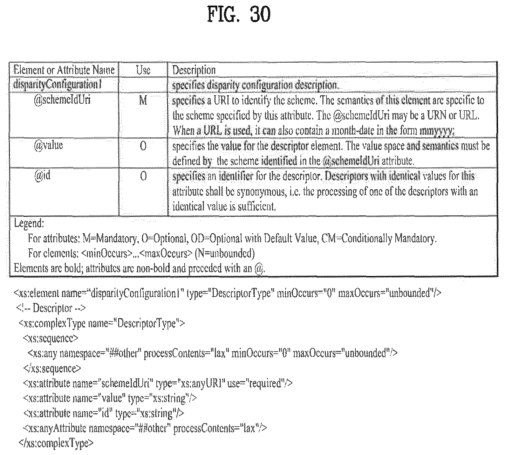

FIG. 30 is a diagram showing explanation of disparity configuration description according to an embodiment of the present invention. According to an embodiment of the present invention, disparity configuration description (disparity configuration information) may be included in the disparityConfiguration1 element and described by the element.

As illustrated in an upper drawing, the disparityConfiguration1 element may include @schemeIdUri, @value, and/or @id. Here, the @schemeIdUri may be a mandatory field and @value and @id may be optional fields.

The @schemeIdUri may indicate a URI for identifying a corresponding schema. The semantics of the disparityConfiguration1 element may be specified by a schema described by the attribute. The attribute may be a URN or a URL. When URL is used as the attribute, the attribute may include date information in the form of mmyyyy. @value may indicate a value for a corresponding element. A space and semantic for the value may be defined by a schema identified by the aforementioned @schemeIdUri. @id may indicate an identifier for a corresponding element. Elements having the same attribute may be the same. That is, when elements having the same attribute value are present, it is sufficient to process only one of the elements and other elements are not inevitably processed.

As in the embodiment shown in a lower drawing, the disparityConfiguration1 element according to the present invention may be represented using XML syntax. Definition of information included in the XML syntax may be the same as in the above description.

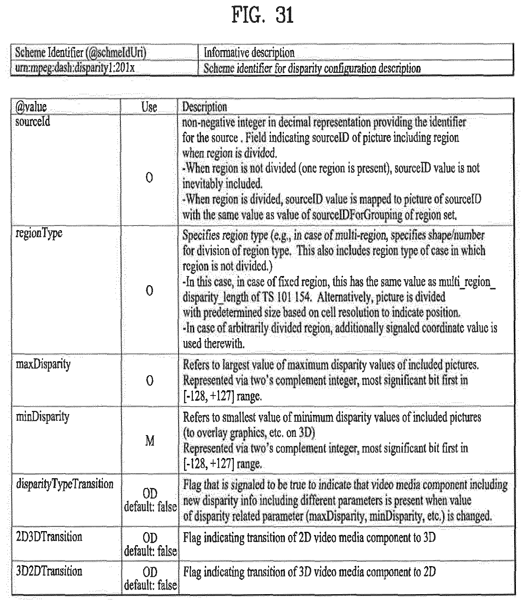

FIG. 31 is a diagram showing explanation of @schemeIdUri and @value of a disparityConfiguration1 element according to an embodiment of the present invention. According to an embodiment of the present invention, @schemeIdUri of the disparityConfiguration1 element may have ur:mpeg:dash:disparity1:201x. This may indicate a schema identifier for disparity configuration description.

According to an embodiment of the present invention, the disparityConfiguration1 element may be a value attribute (@value) and may include source identifier (SourceId), a region type (regionType), maximum disparity (maxDisparity), minimum disparity (minDisparity), disparity type transition (disparityTypeTransition), 2D-3D transition (2D3DTransition), 3D-2D transition (3D2DTransition), the number of regions (numOfRegion), a region identifier (regionID), a source identifier for grouping (sourceIDForGrouping), maximum disparity in a region (maxDisparityInRegion), minimum disparity in a region (minDisparityInRegion), x coordinate (x_coordinate), y coordinate (y_coordinate), region width (region_width), and/or region height (region_height) values. The values described below may not be a mandatory value of a value attribute and, in some embodiments, may include only a portion thereof.

The source identifier (Sourceld) value may function as an identifier for identifying a source in content. When a region in a source is divided, this may indicate a source identifier of a picture including each region. When the region is not divided, that is, when the number of region is 1, a sourceID value may not be included. When the region is divided, the sourceID value may be mapped to a picture of sourceID with the same value as a value of the sourceIDForGrouping of a region set. The region type (regionType) value may indicate a region type. For example, in the case of a multi-region, this may indicate a shape or number for division of a region type. This may also include a region type of the case in which a region is not divided. Here, in the case of a fixed region, this may have the same value as multi_region_disparity_length of TS 101 154. Alternatively, a picture may be divided with a predetermined size based on cell resolution to indicate a position. In the case of an arbitrarily divided region, an additionally signaled coordinate value may be used therewith. The maximum disparity (maxDisparity) value may refer to a largest value among maximum disparity maximum disparity values of pictures included in video and may be represented in a [-128, +127] range. The minimum disparity (minDisparity) value may refer to a smallest value of minimum disparity values of pictures included in video. This may be used to overlay other graphics, pictures, etc. on 3D content. Like the maximum disparity, this may be represented in a [-128, +127] range. The disparity type transition (disparityTypeTransition) value may be signaled to be true to indicate that a video media component including new disparity information (disparity info) including different parameters is present when a value of a disparity related parameter (maxDisparity, minDisparity, etc.) is changed. The 2D-3D transition (2D3DTransition) value may indicate that transmission occurs from a 2D video media component to 3D. The 3D-2D transition (3D2DTransition) value may indicate that transmission occurs from a 3D video media component to 2D. As described above, the MPD may transmit disparity information for 3D content to a receiver using the disparity configuration element.

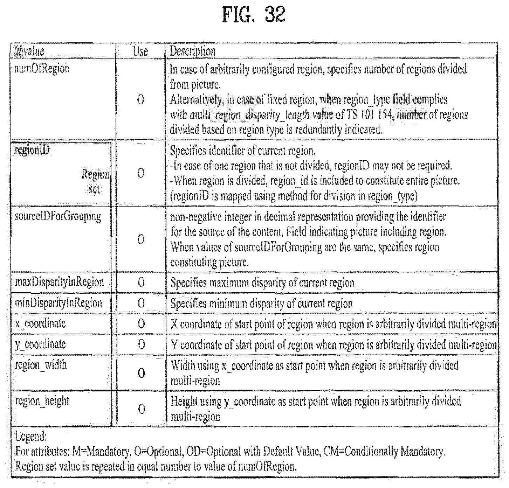

FIG. 32 is a diagram showing description of @value of a disparityConfiguration1 element according to an embodiment of the present invention. The value attribute may further include a next value. Values described below may not be a mandatory value of the disparityConfiguration1 element and may include only a portion in some embodiments.

In the case of an arbitrarily configured region, the num_of_region value may indicate the number of regions divided from a picture. Alternatively, in the case of a fixed region, when the region_type field complies with a multi_region_disparity_length value of TS 101 154, the number of regions divided based on a region type may be redundantly indicated. Detailed meaning of the region_type field based on the multi_region_disparity_length may be the same as in the above description of FIG. 15. The region_id value may be an identifier of a current region. In the case of one region that is not divided, the region_id may not be required. When a region is divided, the region_id may be included to constitute all samples. The region_id may be mapped using an order/method for division in the region_type. The sourceIDForGrouping value may provide an identifier for a source of content. This may be attributes indicating a picture including a region. When values of sourceIDForGrouping are the same, this may indicate a region constituting a picture. The max_disparity_in_region value may indicate a maximum disparity value of a current region. The min_disparity_in_region value may indicate a minimum disparity value of a current region. When a region is an arbitrarily divided multi-region, the x_coordinate value may indicate an x_coordinate indicating a start point of the region. When a region is an arbitrarily divided multi-region, the y_coordinate value may indicate a y coordinate indicating a start point of the region. When a region is an arbitrarily divided multi-region, the region_width value may refer to a width value using the x_coordinate as a start point. When a region is an arbitrarily divided multi-region, the region_height value may refer to a height value using the y_coordinate as a start point.

Among the aforementioned values, region id, sourceIDForGrouping, max_disparity_in_region, min_disparity_in_region, x_coordinate, y_coordinate, region_width, and/or region_height may be values indicating one region set. The values included in the region set may be repeated in equal number to a value of the aforementioned num_of_region. Hereinafter, a detailed embodiment of the disparityConfiguration1 element will be described.

For example, when the number of regions is 1 or there is no division of regions (here, in TS 101 154, multi_region_disparity_length value may have the same meaning as in the case in which the number of regions is 1 and there is no division of regions), the case may be represented as follows.
: <disparityConfiguration1 schemeIdUri="urn:mpeg:dash:disparity1:201x" value=" 1, 2, 64, -16, 0, 0, 0, 1, 1,, 16, -8,,,, "/>

The case in which the number of regions is 2 may be represented as follows.
: <disparityConfiguration1 schemeIdUri="urn:mpeg:dash:disparity1:201x" value=" , 3, 64, -16, 0, 0, 0,, 2, 1, 16, -8,,,,, 2, 8, -8,,,, "/>

That is, in the case of a multiple region, regionID, sourceIDForGrouping, maxDisparityInRegion, minDisparityInRegion, x_coordinate, y_coordinate, region_width, region_height values may be repeatedly included in equal number to the number of regions. In other words, values included in the aforementioned region set may be repeatedly included in equal number to the number of regions. In the aforementioned example, value 2, 1, 16, -8, , , , , 2, 8, -8, , , , may sequentially indicate that the number of regions is 2, a region identifier of a first region is 1, maximum disparity is 16, minimum disparity is -8, a region identifier of a second region is 2, maximum disparity is 8, and minimum disparity is -8.

The maxDisparity/minDisparity may have meaning that is changed according to a position at which a corresponding value is included. For example, when the value is included in a segment element, this may refer to a max/min disparity value of pictures included in a segment and, when the value is included in a representation element, this may refer to a max/min disparity value of pictures of a segment included in corresponding representation. When the value is included in an AdaptaionSet element, this may refer to a max/min disparity value of pictures of a segment included in representation while being included in a corresponding adaption set. Like in the above case, the maxDisparityInRegion/minDisparityInRegion may also have meaning that is changed according to a position at which a corresponding value is included. That is, when the value is included in a segment, this may refer to a max/min disparity value of a corresponding region included in a segment, when the value is included in representation, this may refer to a max/min disparity value of corresponding regions of a segment included in representation, and when the value is included in an adaption set (AdaptationSet), this may refer to a max/min disparity value of corresponding regions of a segment that is included in representation while being included in an adaption set (AdaptationSet),

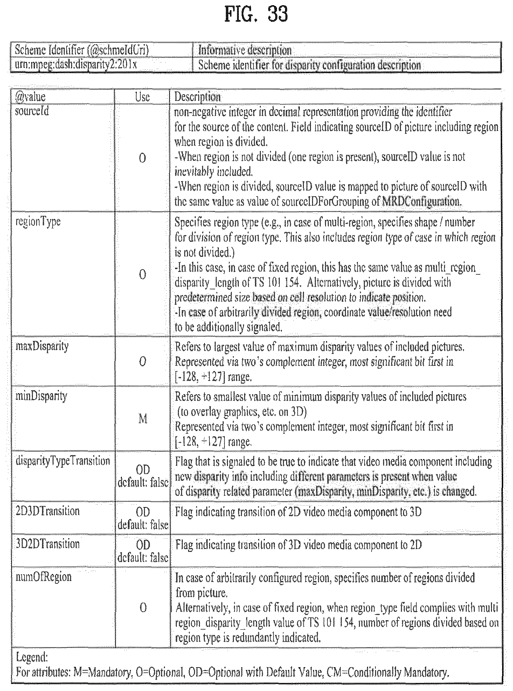

FIG. 33 shows description of @schemeIdUri and @value of a disparityConfiguration1 element according to another embodiment of the present invention. According to an embodiment of the present invention, the @schemeIdUri of the disparityConfiguration1 element may have urn:mpeg:dash:disparity2:201x. This may indicate a schema identifier for disparity configuration description.

According to an embodiment of the present invention, the disparityConfiguration1 element may be value attribute (@value) and may include source identifier (SourceId), region type (regionType), maximum disparity (maxDisparity), minimum disparity (minDisparity), disparity type transition (disparityTypeTransition), 2D-3D transition (2D3DTransition), 3D-2D transition (3D2DTransition), and/or the number of regions (numOfRegion) values. Values described below may not be a mandatory value of the disparityConfiguration1 element and may include only a portion in some embodiments. The aforementioned region type (regionType), region identifier (regionID), source identifier for groping (sourceIDForGrouping), maximum disparity (maxDisparityInRegion) in a region, minimum disparity (minDisparityInRegion) in a region, x coordinate (x_coordinate), y coordinate (y_coordinate), a region width (region_width), and/or a region height (region_height) values may be signaled by separate description (MRDConfiguration element) described in the following drawings.

The source identifier (SourceId) value may indicate an identifier of a soruce and, when a region is divided, a picture of sourceID having the same value as a value of sourceIDForGrouping of MRDConfiguration may be mapped to disparity information for each region. Description of each value is the same as in the above description.

In the illustrated embodiment, schemeIdUri of disparityConfiguration1 is different. In the case of a multiple region, Multiple-Region Disparity Configuration (MRDConfiguration) may be repeatedly connected in equal number to a value of the number of regions (numOfRegion). Like in the above case of urn:mpeg:dash:disparity1:201x, a min/max disparity value may have meaning that is changed according to a position (AdaptationSet, Representation, Segment) at which a value of maxDisparity/minDisparity is included.

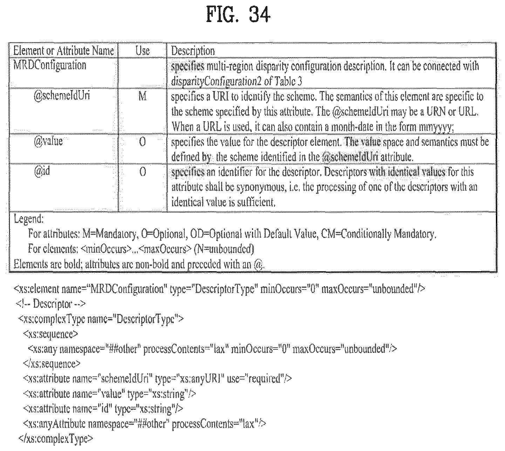

FIG. 34 is a diagram showing disparity configuration of a plurality of regions according to an embodiment of the present invention. According to an embodiment of the present invention, the disparity configuration information of a plurality of regions may be included in a disparity configuration (MRDConfiguration) element of a plurality of regions and described by a corresponding element. When schemeIdUri of disparityConfiguration1 is urn:mpeg:dash:disparity2:201x, disparityConfiguration1 element may be connected to MRDConfiguration element and used. That is, in the case of a multi-region, MRDConfiguration(s) for each region may be connected and used in equal number to the number of regions. As necessary, only disparity information of a region may be included without overall disparity information of the region. That is, in this case, the MRDConfiguration(s) may be used alone.

As in the embodiment illustrated in an upper drawing, the MRDConfiguration element may include @schemeIdUri, @value, and/or @id. Here, the @schemeIdUri may be a mandatory field and the @value and the @id may be optional fields. The @schemeIdUri may indicate a URI for identifying a corresponding schema. The semantic of the MRDConfiguration element may be specified to a schema described by the attribute. The attribute may be a URN or a URL. When a URL as the attribute is used, the attribute may include data information in the form of mmyyyy. The @value may indicate a value for a corresponding element. A space and semantic for the value may be defined by a schema defined by the aforementioned @schemeIdUri. The @id may indicate an identifier for a corresponding element. Elements with the same attribute value may be the same. That is, when elements having the same attribute value are present, it is sufficient to process only one of the elements and other elements are not inevitably processed.

As in the embodiment shown in a lower drawing, the MRDConfiguration element according to the present invention may be represented using XML syntax. Definition of information included in the XML syntax may be the same as in the above description.

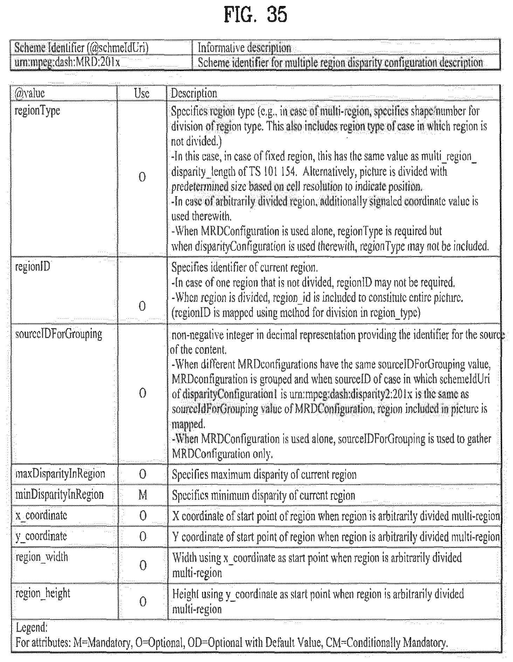

FIG. 35 is a diagram showing explanation of @value of an MRDConfiguration element according to an embodiment of the present invention. The MRDConfiguration element may include region type (regionType), region identifier (regionID), source identifier for grouping (sourceIDForGrouping), maximum disparity in a region (maxDisparityInRegion), minimum disparity in a region (minDisparityInRegion), x coordinate (x_coordinate), y coordinate (y_coordinate), region width (region_width), and/or region height (region_height) values. Detailed description of each value may be the same as in the above description. However, when MRDConfiguration is used alone with regard to the region type (regionType), a regionType may be required but when disparityConfiguration1 is used therewith, the regionType may not be included. With regard to the source identifier (sourceIDForGrouping) for grouping, when different MRDConfigurations have the same sourcelDForGrouping value, the MRDConfiguration may be grouped and, when sourceID of the case in which schemeIdUri of disparityConfiguration1 is urn:mpeg:dash:disparity2:201x is the same as a sourceIdForGrouping value of MRDConfiguration, a region included in a picture may be mapped. When the MRDConfiguration is used alone, the sourceIDForGrouping may be used to gather MRDConfiguration only. Like in the case of the above disparityConfiguration1, the meaning of min/max disparity of a corresponding region may be changed according to a position (AdaptationSet, Representation, Segment) at which a value of the maxDisparityInRegion/minDisparityInRegion is included. As described above, when schemeIdUri of disparityConfiguration1 is urn:mpeg:dash:disparity2:201x, MRDConfiguration may be repeated and disparity information of each region may be transmitted according to information of the number of regions (numOfRegion) and information of a region type (regionType). In this case, when a value of source identifier (sourceID) of DisparityConfiguration1 and a source identifier for grouping (sourceIDForGrouping) of MRDConfiguration have the same value, disparity information of a picture may be recognized via disparityConfiguration1 and disparity information of each region corresponding to a portion of a picture may be recognized via each MRDConfigurations with the same sourceIDForGrouping value as the sourceID.

An embodiment in which a picture includes a plurality of regions will be described below.
<disparityConfiguration1 schemeIdUri="urn:mpeg:dash:disparity2:201x" value=" 1, 5, 64, -16, 1, 0, 0, 4"/>
<MRDConfiguration schemeIdUri="urn:mpeg:dash:MRD:201x" value=" , 1, 1, 16, -8,,,, "/>
<MRDConfiguration schemeIdUri="urn:mpeg:dash:MRD:201x" value=" , 2, 1, 16, -16,,,, "/>
<MRDConfiguration schemeIdUri="urn:mpeg:dash:MRD:201x" value=" , 3, 1, 8, -8,,,, "/>
<MRDConfiguration schemeIdUri="urn:mpeg:dash:MRD:201x" value=" , 4, 1, 64, -8,,,, "/>

That is, disparity information of a picture may be transmitted via DisparityConfiguration1 and a detailed value may be 1, 5, 64, -16, 1, 0, 0, and 4. Detailed description of each value may indicate that a source identifier is 1, a region type is 5, and four minimum disparity values present in regions. This may signal that maximum disparity of a picture is 64, minimum disparity is -16, a disparity type of transition occurs, and the number of regions is 4. MRDConfigurations for a first region may indicate that a region identifier is 1, a source identifier for grouping is 1, maximum disparity is 16, and minimum disparity is -8. Similarly, MRDConfigurations of each of the remaining regions may be signaled with respect to a region identifier, a source identifier for grouping, maximum disparity, and minimum disparity.

In some embodiments, MRDConfiguration(s) may be used alone without disparicyconfiguration1. That is, this may have only disparity information for each region without disparity information of an entire region.

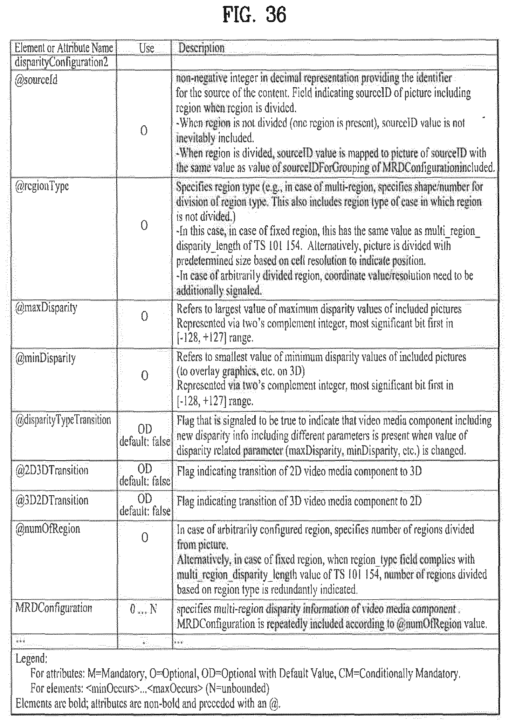

FIG. 36 shows disparity configuration description according to another embodiment of the present invention. Unlike in the above description, the disparityConfiguration2 element may include disparity information as attributes included in the element and may include the aforementioned MRD configuration of information for each of information as an element. The disparityConfiguration2 element may include an adaptation set, attributes applicable to representation and/or subrepresentation element, and elements.

According to an embodiment of the present invention, the disparityConfiguration2 element may be attributes and may include source identifier (SourceId), region type (regionType), maximum disparity (maxDisparity), minimum disparity (minDisparity), disparity type transition (disparityTypeTransition), 2D-3D transition (2D3DTransition), 3D-2D transition (3D2DTransition), and/or the number of regions (numOfRegion) attributes. The element may include the aforementioned MRD configuration element. Description of values described in the disparityConfiguration1 element may be applied to each attribute. The MRD configuration (MRDConfiguration) element may provide disparity information of a plurality of regions included in a video component and may be repeatedly included in equal number to the number of the aforementioned regions.

When the disparityConfiguration2 includes MRDConfiguration as an element, the disparityConfiguration2 element may be represented using XML syntax as follows.
<disparityConfiguration2 sourceID=" " regionType="5" maxDisparity ="64" minDisparity ="-16"disparityTypeTransition ="false" 2D3DTransition ="false" 3D2DTransition ="false" numOfRegion ="4">
<MRDConfiguration schemeIdUri="urn:mpeg:dash:MRD:201x" value=" , 1,, 16, -8,,,, " />
<MRDConfiguration schemeIdUri="urn:mpeg:dash:MRD:201x" value=" , 2,, 16,-16,,,, "/>
<MRDConfiguration schemeIdUri="urn:mpeg:dash:MRD:201x" value=" , 3,, 8, -8,,,, "/>
<MRDConfiguration schemeIdUri="urn:mpeg:dash:MRD:201x" value=" , 4,, 64, -8,,,, "/>
</disparityConfiguration2>

That is, the disparityConfiguration2 element may include information on the type or number of regions included in a picture and the MRDConfiguration element may signal a region identifier for each region, maximum disparity, and minimum disparity. Maximum disparity and minimum disparity attribute included in the disparityConfiguration2 element may signal maximum disparity value (64) of maximum disparity values of a plurality of regions and minimum disparity value (-16) of minimum disparity values of a plurality of regions. Like in the aforementioned disparityConfiguration1, the meaning of maxDisparity/minDisparity/maxDisparityInRegion/ minDisparityInRegion values may be changed according to a position (AdaptationSet, Representation, Segment) at which the disparityConfiguration2 is included.

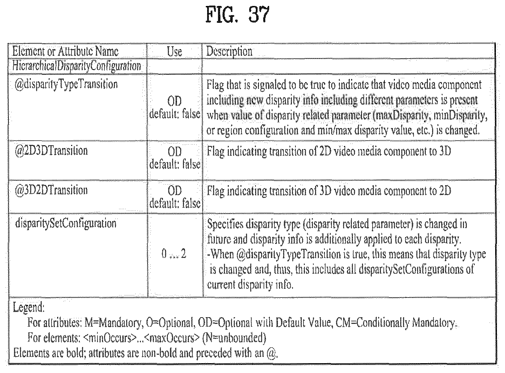

FIG. 37 is a diagram showing disparity configuration description according to another embodiment of the present invention. In the present embodiment, MPD may include a hierarchical disparity configuration (HierarchicalDisparityConfiguration) element. The hierarchical disparity configuration element may include disparity type transition attribute, 2D-3D transition attribute, 3D-2D transition attribute, and disparity set configuration (disparitySetConfiguration(s)) element. Description of each attribute is the same as the above description. The hierarchical disparity configuration (HierarchicalDisparityConfiguration) element may include attributes and elements that are applicable to an adaptation set, representation, and/or subrepresentation elements. The hierarchical disparity configuration may be different from the aforementioned disparityConfiguration2 element due to the following reasons. When disparity type transition (disparityTypeTransition) attribute is true, the disparityConfiguration2 element may indicate that a current disparity type is changed in the future but may not indicate that a changed type. However, when the @disparityTypeTransition is true, the hierarchical disparity configuration (HierarchicalDisparityConfiguration) element may indicate that a current disparity type is supposed to be changed and a disparity set configuration (disparitySetConfiguration) element as disparity information (disparity info) may be additionally provided for each disparity set. That is, when the @disparityTypeTransition is true, this may indicate that a disparity type is changed and, thus, this may include disparitySetConfiguration of current disparity information and may further include disparitySetConfiguration of disparity information that is supposed to be changed.

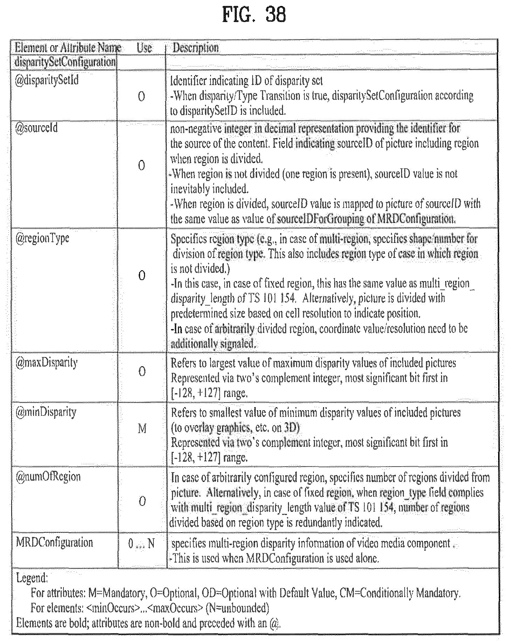

FIG. 38 is a diagram showing a disparity set configuration element according to another embodiment of the present invention. The disparity set configuration (disparitySetConfiguration) element may include disparity set identifier (disparitySetId), source identifier (SourceId), region type (regionType), maximum disparity (maxDisparity), minimum disparity (minDisparity), and/or the number of regions (numOfRegion) attributes. The disparity set configuration element may further include the aforementioned MRDConfiguration as an element. That is, the hierarchical disparity configuration (hierarchicalDisparityConfiguration) element may include a disparity set configuration (disparitySetConfiguration) element and the disparity set configuration (disparitySetConfiguration) element may hierarchically include a disparity configuration (MRDConfiguration) element of a plurality of regions. The disparity set configuration (disparitySetConfiguration) element may include an adaptation set, and attributes and elements applicable to representation and/or subrepresentation elements.

The disparity set identifier (disparitySetId) attribute may indicate an ID of the disparity set. When disparity type transition (disparityTypeTransition) attribute included in the hierarchical disparity configuration (hierarchicalDisparityConfiguration) element is true, the disparitySetConfiguration according to a disparity set identifier (disparitySetID) may be included. Description of the remaining attribute and the disparity configuration (MRDConfiguration) element of a plurality of regions may be the same as in the above description.

When the HierarchicalDisparityConfiguration includes disparitySetConfiguration as an element and the disparitySetConfiguration includes MRDConfiguration as an element, the HierarchicalDisparityConfiguration element may be represented using XML syntax as follows.
<hierarchicalDisparityConfiguration disparityTypeTransition ="true" 2D3DTransition ="false" 3D2DTransition ="false">
<disparitySetConfiguration disparitySetId =" 1" sourceID=" " regionType="5" maxDisparity ="64" minDisparity ="-16"
   numOfRegion ="4">
<MRDConfiguration schemeIdUri="urn:mpeg:dash:MRD:201x" value=" , 1,, 16, -8,,,, " />
<MRDConfiguration schemeIdUri="urn:mpeg:dash:MRD:201x" value=" , 2,, 16, -16,,,,"/>
<MRDConfiguration schemeIdUri="urn:mpeg:dash:MRD:201x" value=" , 3,, 8, -8,,,, "/>
<MRDConfiguration schemeIdUri="urn:mpeg:dash:MRD:201x" value=" , 4,, 64, -8,,,, "/>
</disparitySetConfiguration >
<disparitySetConfiguration disparitySetId =" 2" sourceID=" " regionType="3" maxDisparity ="32" minDisparity ="-32"
   numOfRegion ="4">
<MRDConfiguration schemeIdUri="urn:mpeg:dash:MRD:201x" value=" , 1,, 16, -32,,,, "/>
<MRDConfiguration schemeIdUri="urn:mpeg:dash:MRD:201x" value=" , 2,, 32, -8,,,, "/>
</disparitySetConfiguration >
</hierarchicalDisparityConfiguration>

That is, when disparityTypeTransition attribute included in the hierarchicalDisparityConfiguration element is set to be true, a disparitySetConfiguration element, disparitySetId for signaling current disparity information of which is 1 and a disparitySetConfiguration element for signaling disparity information to be supposed to transited of which is 2 may be signaled therewith. Each disparitySetConfiguration element may include a plurality of MRDConfiguration elements for signaling disparity information of each region. Like in the case of the aforementioned disparityConfiguration1/disparityConfiguration2, the meaning of a value of maxDisparity/ minDisparity/maxDisparityInRegion/minDisparityInRegion may be changed according to a position (AdaptationSet, Representation, Segment) at which the HierarchicalDisparityConfiguration element is included.

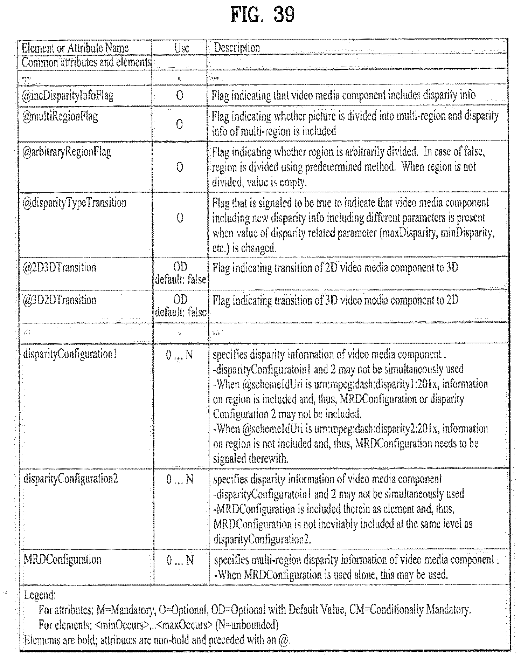

FIG. 39 is a diagram showing common attributes and elements including disparity information according to an embodiment of the present invention. The common attributes and elements element may include attributes of @incDisparityInfoFlag, @multiRegionFlag, @arbitraryRegionFlag, @disparityTypeTransition, @2D3DTransition, and/or @3D2DTransition and include at least one of a disparityConfiguration1 element, a disparityConfiguration2 element, and/or an MRDConfiguration element. Description of the inc_disparity_info_flag field, multi_region_flag field, arbitrary_region_flag field, disparity_type_transition_flag field, 2d_3d_transition_flag field, and 3d_2d_transition_flag field, which have been described in FIG. 17, may be applied to definition of the incDisparityInfoFlag, @multiRegionFlag, @arbitraryRegionFlag, @disparityTypeTransition, @2D3DTransition, and @3D2DTransition attributes in the same way. The disparityConfiguration1 element may include disparity information of a video media component. The disparityConfiguration1 element and the disparityConfiguration2 may not be simultaneously included in the common attributes and elements element. That is, when any one of the two elements is included in the common attributes and elements element, the other one may not be included in order to prevent redundancy of information. In addition, when schemeIdUri of disparityConfiguration1 element is urn:mpeg:dash:disparity1:201x, this includes information on a region and, thus, the MRDConfiguration element or the disparityConfiguration2 element may not be included. When the schemeIdUri is urn:mpeg:dash:disparity2:201x, this may not include disparity information of a region and, thus, MRDConfiguration element may be signaled therewith. The disparityConfiguration2 element may include disparity information of a video media component. As described above, disparityConfiguration1 and 2 may not be simultaneously used. As described above, the disparityConfiguration2 element includes the MRDConfiguration element as an element therein and, thus, a separate MRDConfiguration element may not be included at the same level as the disparityConfiguration2 element. The MRDConfiguration element may include disparity information of a plurality of regions of a video media component. The MRDConfiguration element include in the common attributes and elements element at the same level as the aforementioned disparityConfiguration1 and 2 may be included when the MRDConfiguration element is used alone. The disparityConfiguration1, disparityConfiguration2, and/or MRDConfiguration included in the aforementioned common attributes and elements element may include attributes and elements that are applicable to an adaptation set, and representation and/or subrepresentation element.

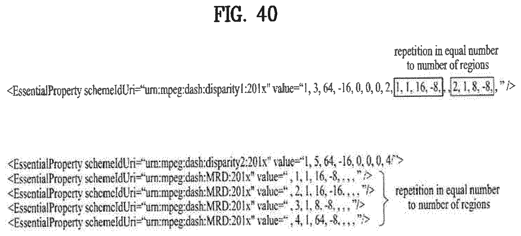

FIG. 40 is a diagram showing a method of transmitting disparity information using essential property (EssentialProperty) or supplementary property (SupplementaryProperty) descriptor according to an embodiment of the present invention. The disparityConfiguration1 description may be signaled through the essential property (EssentialProperty) or supplementary property (SupplementaryProperty) descriptor. The essential property (EssentialProperty) or supplementary property (SupplementaryProperty) descriptor may be included in an adaptation set element and, in this case, the same disparity information may be applied to all representation included in a corresponding adaptation set. According to another embodiment of the present invention, the essential property (EssentialProperty) or supplementary property (SupplementaryProperty) descriptor may be included in a representation element or subrepresentation element in order to apply different disparity to each representation or subrepresentation.

The embodiment illustrated in an upper drawing indicates disparity information included in the essential property. That is, the essential property may set schemeIdUri to urn:mpeg:dash:disparity1:201x and disparity information for each region may be repeatedly included in value attribute in equal number to the number of regions. The same description as the description of FIG. 32 may be applied thereto. The drawing shows an example of signaling using the essential property and, in the drawing, disparity information transmitted via the essential property may be transmitted via the supplementary property in the same form.

The embodiment illustrated in a lower drawing indicates disparity information included in the essential property. That is, the essential property may set schemeIdUri to urn:mpeg:dash:disparity2:201x. The essential property having the schemeIdUri of urn:mpeg:dash:MRD:201x may be defined for each region and, thus, may signal disparity information for each region. Here, the essential property for each region may be repeated in equal number to the number of regions and the same description as the description of FIG. 36 may be applied thereto. The drawing shows an example of signaling using the essential property and, in the drawing, the disparity information transmitted via the essential property may be transmitted via the supplementary property in the same form.

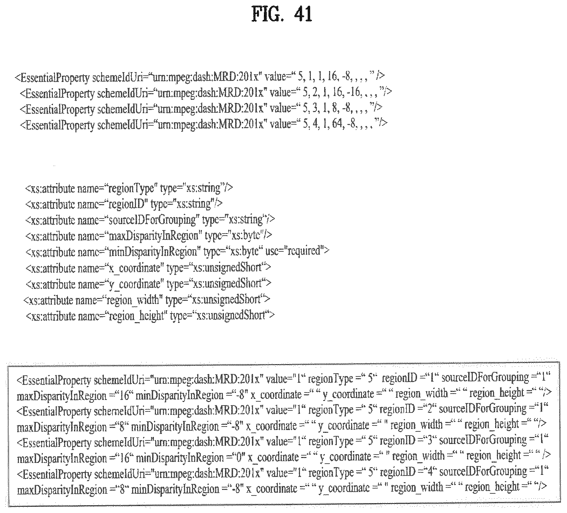

FIG. 41 is a diagram showing the case in which disparity configuration of a plurality of regions is used alone according to an embodiment of the present invention. As illustrated in an upper drawing, the disparity configuration (MRDConfiguration) description of a plurality of regions may be signaled using the essential property (EssentialProperty) or supplementary property (SupplementaryProperty) descriptor. The essential property (EssentialProperty) or supplementary property (SupplementaryProperty) descriptor may be included in an adaptation set element and, in this case, the same disparity information may be applied to all representations included in a corresponding adaptation set. According to another embodiment of the present invention, the essential property (EssentialProperty) or supplementary property (SupplementaryProperty) descriptor may be included in a representation element or subrepresentation element in order to apply different disparity to each representation or subrepresentation. The drawing shows an example of signaling a plurality of MRDConfigurations using the essential property and, in the drawing, the disparity information transmitted via the essential property may be transmitted via the supplementary property in the same form.

When the disparity configuration (MRDConfiguration) of a plurality of regions is used alone, @schemeIdUri may be set to "urn:mpeg:dash:MRD:201x" and essential property or supplementary property set to @value='1' may be used. Here, the @value may indicate a version of a descriptor. The essential property or the supplementary property may further include attributes shown in an intermediate drawing. The attributes may be attributes defined to use the MRDConfiguration as essential property or supplementary property. Definition of each attribute is the same as in the above description.

When the disparity configuration (MRDConfiguration) of a plurality of regions is used alone, the essential property, @schemeIdUri of which is set to urn:mpeg:dash:MRD:201x, may be used, as shown in a lower drawing. The essential property may be repeatedly used in equal number to the number of regions and each essential property may indicate disparity information of each region. In the present embodiment, the essential property or the supplementary property may include at least one of region type, region identifier, source identifier for grouping, maximum disparity in a region, minimum disparity in a region, x coordinate, y coordinate, region width, and/or region height attributes.

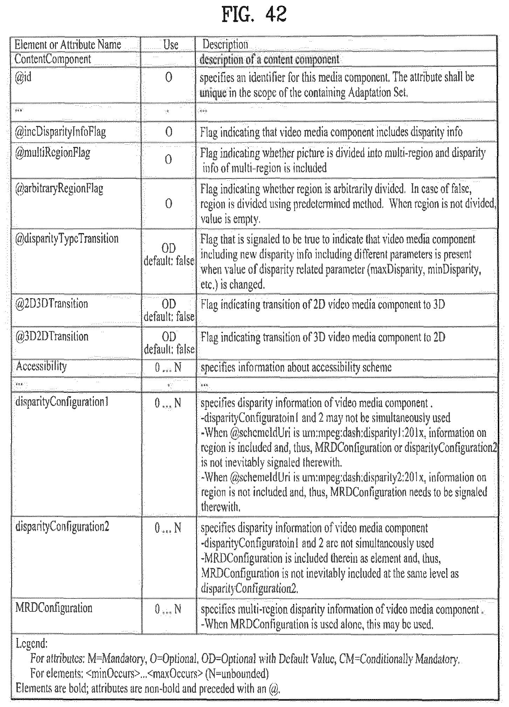

FIG. 42 is a diagram showing a content component element including disparity information according to an embodiment of the present invention. The content component (ContentComponent) element may include attributes of @id, @incDisparityInfoFlag, @multiRegionFlag, @arbitraryRegionFlag, @disparityTypeTransition, @2D3DTransition, and/or @3D2DTransition and may include at least one of a disparityConfiguration1 element, a disparityConfiguration2 element, and/or an MRDConfiguration element. The @id may be an identifier for identifying a content component described by the content component element. Description of the inc_disparity_info_flag field, the multi_region_flag field, the arbitrary_region_flag field, the disparity_type_transition_flag field, the 2d_3d_transition_flag field, and the 3d_2d_transition_flag field, which have been described above with regard to FIG. 17, may be applied to definition of @incDisparityInfoFlag, @multiRegionFlag, @arbitraryRegionFlag, @disparityTypeTransition, @2D3DTransition, and @3D2DTransition attributes, respectively, in the same way. The disparityConfiguration1 element may include disparity information of a video media component. The disparityConfiguration1 element and the disparityConfiguration2 may not be simultaneously included in the ContentComponent element. That is, when any one of the two elements is included in the ContentComponent element, the other one may not be included in order to prevent redundancy of information. When schemeIdUri of the disparityConfiguration1 element is urn:mpeg:dash:disparity1:201x, this includes information of a region and, thus, the MRDConfiguration element or the disparityConfiguration2 element may not be included. When the schemeIdUri is urn:mpeg:dash:disparity2:201x, this does not include disparity information of a region and, thus, the MRDConfiguration element may be signaled therewith. The disparityConfiguration2 element may include disparity information of a video media component. As described above, the disparityConfiguration1 and 2 may not be simultaneously used. As described above, the disparityConfiguration2 element may include the MRDConfiguration element therein as an element and, thus, may not include a separate MRDConfiguration element at the same level as the disparityConfiguration2 element. The MRDConfiguration element may include disparity information of a plurality of regions of a video media component. The MRDConfiguration element included in the ContentComponent element at the same level as the aforementioned disparityConfiguration1 and 2 may be included when the MRDConfiguration element is used alone. disparityConfiguration1, disparityConfiguration2, and/or MRDConfiguration included in the aforementioned ContentComponent element may include attributes and elements that are applicable to an adaption set, and representation and/or subrepresentation elements.

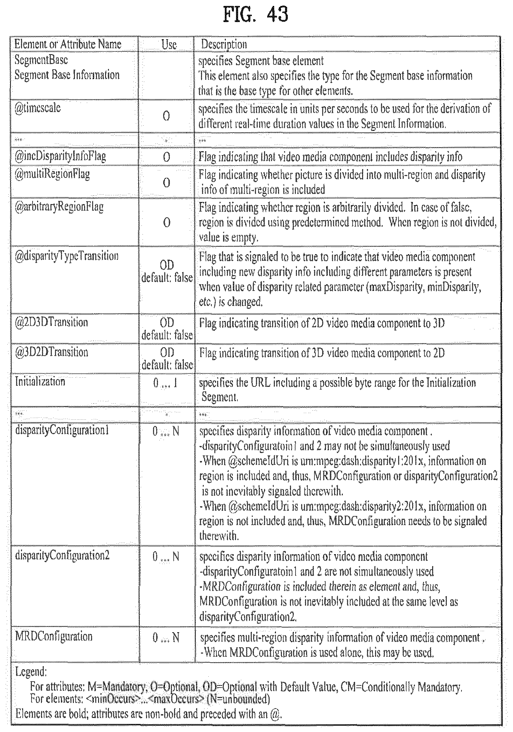

FIG. 43 is a diagram showing a segment base element including disparity information according to an embodiment of the present invention. The segment base (SegmentBase) element may include attributes of @incDisparityInfoFlag, @multiRegionFlag, @arbitraryRegionFlag, @disparityTypeTransition, @2D3DTransition, and/or @3D2DTransition and include at least one of a disparityConfiguration1 element, a disparityConfiguration2 element, and/or an MRDConfiguration element. Description of the inc_disparity_info_flag field, the multi_region_flag field, the arbitrary_region_flag field, the disparity_type_transition_flag field, the 2d_3d_transition_flag field, and the 3d_2d_transition_flag field, which have been described above in FIG. 17, may be applied to definition of the @incDisparityInfoFlag, @multiRegionFlag, @arbitraryRegionFlag, @disparityTypeTransition, @2D3DTransition, and @3D2DTransition attributes, respectively, in the same way. A relation of the disparityConfiguration1 element, the disparityConfiguration2 element, and/or the MRDConfiguration element may be the same as in the above description of the previous drawings.

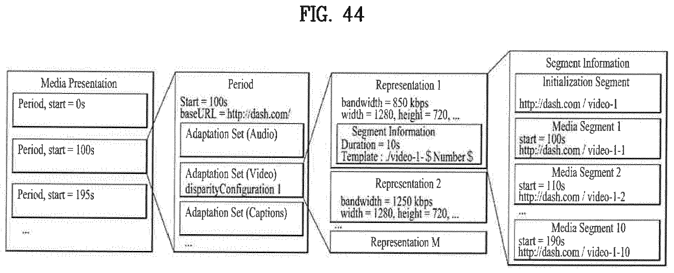

FIG. 44 shows an adaptation set element including disparity information according to an embodiment of the present invention. As described above, the adaptation set element may include disparityConfiguration1 or disparityConfiguration2 as a disparityConfiguration1 descriptor or a disparityConfiguration2 descriptor. The adaptation set element may include disparityConfiguration1 or disparityConfiguration2 as an essential property or supplementary property descriptor. Parameters included in disparityConfiguration1 or disparityConfiguration2 may be applied to all representations in an adaptation set. The illustrated embodiment may indicate a position of disparityConfiguration1 and disparityConfiguration2 or MRDConfiguration may be positioned at the same position.

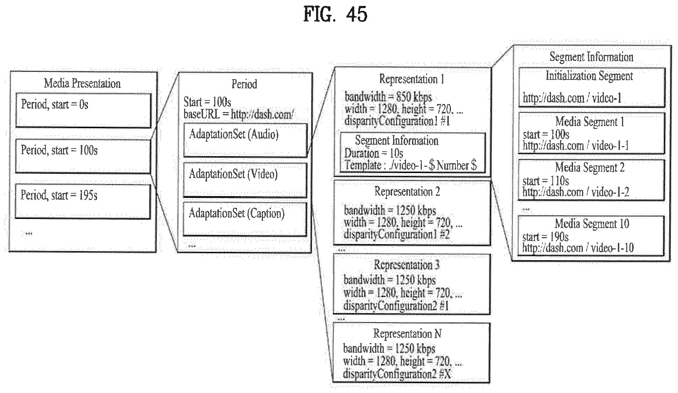

FIG. 45 shows a representation element including disparity information according to an embodiment of the present invention. As described above, the representation element may include disparityConfiguration1 or disparityConfiguration2 as a disparityConfiguration1 descriptor or a disparityConfiguration2 descriptor. Each representation element may include disparityConfiguration1, disparityConfiguration2, or MRDConfiguration even if the element is included in the same adaptation set. That is, even if a first representation element and a second representation element are included in the same adaptation set element, the elements may include different descriptor forms. For example, the first representation element may include the disparityConfiguration1 descriptor and the second representation element may include the disparityConfiguration2 descriptor.

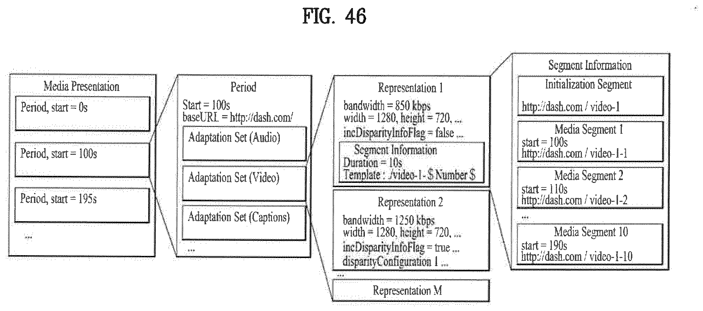

FIG. 46 shows a representation element including disparity information according to an embodiment of the present invention. As described above, the representation element may include disparityConfiguration1 or disparityConfiguration2 as the disparityConfiguration1 descriptor or the disparityConfiguration2 descriptor. Each representation element may or may not include disparity information based on the incDisparityInfoFlag. That is, even if elements are included in the same adaptation set, representation that includes disparityConfiguration1, disparityConfiguration2, or MRDConfiguration may be present and representation that does not include these may be present. That is, even if the first representation element and the second representation element are included in the same adaptation set element, whether disparity information is included may be changed. For example, the first representation element may include a disparityConfiguration1 descriptor and the second representation element may not include disparity related information.

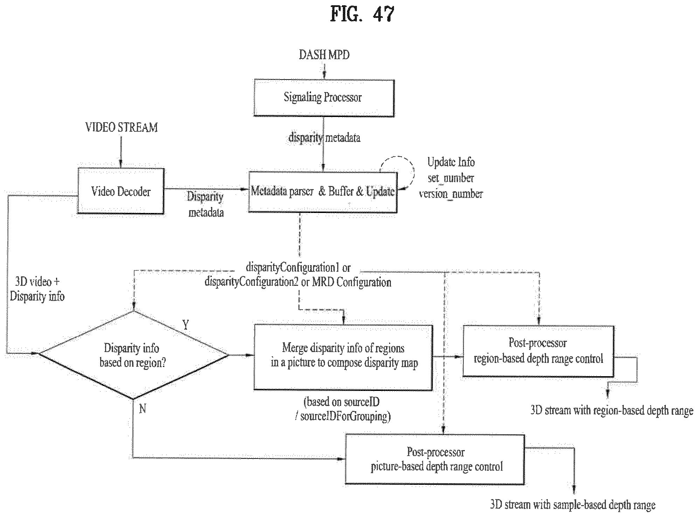

FIG. 47 is a diagram showing an operation of a media engine of a receiver based on disparity information processing capability according to an embodiment of the present invention.

A signaling processor of a receiver may receive MPD and acquire disparity metadata. The disparity information (metadata) may be transmitted to a metadata parser. The video decoder may decode video samples to acquire 3D video data. When the disparity information acquired during this procedure is present, the information may be transmitted to the metadata parser. The metadata parser may parse the received disparity metadata. The metadata parser may update a buffer and metadata. Update may be performed using set_number, version_number, etc. The video decoder and the metadata parser may be a hardware block and may be referred to as a decoding processor and a metadata parsing processor, respectively, or referred to as a decoding circuit and a metadata parsing circuit, respectively. The metadata parser may transmit information of the aforementioned disparityConfiguration1, disparityConfiguration2, or MRDConfiguration to a preprocessor and/or a post-processor.

Next operations may be changed according to whether disparity information for each region is present. When disparity information based on a region in the parsed metadata is present, the preprocessor may merge disparity information of a plurality of regions included in one sample to compose a disparity map. That is, in a pre-processing operation, disparity information of all regions may be acquired based on disparity information for each region. Here, a merge operation of disparity information may be performed based on a source identifier (sourceID) or a source identifier for grouping (sourceIDForGrouping). Then, the post-processor may perform depth range control based on each region and apply different disparities to respective regions.

When disparity information based on a region is not present in parsed metadata, the post-processor may perform depth range control based on each sample and apply disparity for each sample.

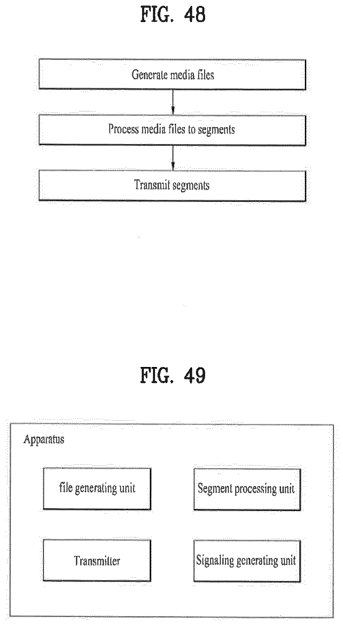

FIG. 48 is a diagram showing a method of transmitting a broadcast signal according to an embodiment of the present invention. The method of transmitting a broadcast signal according to an embodiment of the present invention may include generating media files, processing the media files to segments, and transmitting the segments.

In the generating of the media files, video content components may be generated as the aforementioned ISOBMFF media file. In this operation, the aforementioned disparity information may be included in an ISOBMFF media file and signaled. As described with reference to FIGs. 15 to 28, the disparity information may be included in a specific box in a media file and may be included in the SEI box and transmitted. According to another embodiment of the present invention, the aforementioned disparity information may be included in MPD that is generated separately from the ISOBMFF file. The disparity information may be included in a specific element in MPD and signaled, as described with reference to FIGs. 29 to 47.

In the processing of the media files to the segment, the aforementioned ISOBMFF media file may be segmented to generate a plurality of segments. In the transmitting of the segment, the generated segment may be transmitted to a receiving end via broadcast or a broadband network. Here, the disparity information may be signaled through a box in ISOBMFF divided into segments or may be included in MPD that is separately transmitted from a segment and signaled.

FIG. 49 is a diagram showing a broadcast signal transmission apparatus according to an embodiment of the present invention. The broadcast signal transmission apparatus according to an embodiment of the present invention may include a media file generating unit, a segment processing unit, a signaling generating unit, and/or a transmitter. ( 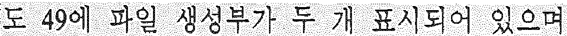 , 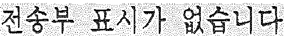 . 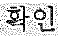 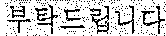 .)

The media file generating unit may generate a video content component as the aforementioned ISOBMFF media file. The media file generating unit may include the aforementioned disparity information in an ISOBMFF media file. The disparity information may be included in a specific box in a media file and may be included in a SEI box, as described with reference to FIGs. 15 to 28. According to another embodiment of the present invention, the aforementioned disparity information may be included in MPD that is separately generated from the ISOBMFF media file by the signaling generating unit. The disparity information may be included in a specific element in MPD, as described with reference to FIGs. 29 to 47.

The segment processing unit that processes media files into segments may segment the aforementioned ISOBMFF media file to generate a plurality of segments. The transmitter may transmit the generated segments and MPD to a receiving end via broadcast or broadband. Here, the disparity information may be signaled through a box in ISOBMFF divided into segments or may be included in MPD transmitted separately from a segment and signaled.

Modules or units may be processors executing consecutive processes stored in a memory (or a storage unit). The steps described in the aforementioned embodiments can be performed by hardware/processors. Modules/blocks/units described in the above embodiments can operate as hardware/processors. The methods proposed by the present invention can be executed as code. Such code can be written on a processor-readable storage medium and thus can be read by a processor provided by an apparatus.

While the embodiments have been described with reference to respective drawings for convenience, embodiments may be combined to implement a new embodiment. In addition, designing computer-readable recording media storing programs for implementing the aforementioned embodiments is within the scope of the present invention.

The apparatus and method according to the present invention are not limited to the configurations and methods of the above-described embodiments and all or some of the embodiments may be selectively combined to obtain various modifications.

The methods proposed by the present invention may be implemented as processor-readable code stored in a processor-readable recording medium included in a network device. The processor-readable recording medium includes all kinds of recording media storing data readable by a processor. Examples of the processor-readable recording medium include a ROM, a RAM, a CD-ROM, a magnetic tape, a floppy disk, an optical data storage device and the like, and implementation as carrier waves such as transmission over the Internet. In addition, the processor-readable recording medium may be distributed to computer systems connected through a network, stored and executed as code readable in a distributed manner.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Such modifications should not be individually understood from the technical spirit or prospect of the present invention.

Both apparatus and method inventions are mentioned in this specification and descriptions of both the apparatus and method inventions may be complementarily applied to each other.

Those skilled in the art will appreciate that the present invention may be carried out in other specific ways than those set forth herein without departing from the spirit and essential characteristics of the present invention.

In the specification, both an apparatus invention and a method invention are mentioned and description of both the apparatus invention and the method invention can be applied complementarily.

### [Mode for Invention]

Various embodiments have been described in the best mode for carrying out the invention.

### [Industrial Applicability]

The present invention is applicable to broadcast signal providing fields.

Various equivalent modifications are possible within the spirit and scope of the present invention, as those skilled in the relevant art will recognize and appreciate. Accordingly, it is intended that the present invention cover the modifications and variations of this invention provided they come within the scope of the appended claims and their equivalents.

## Claims

1. A method of transmitting media content, the method comprising:
generating media files comprising information on presentation of media content, at least one of the media file comprising a movie block comprising metadata of presentation of the media file and at least one fragment, the movie block comprising at least one track block comprising metadata of a track included in the presentation, and the at least one fragment comprising a movie fragment block for providing metadata of presentation of a corresponding fragment and a media data block comprising video samples for presentation of the corresponding fragment;
processing the media files into a plurality of segments; and
transmitting the plurality of segments,
wherein the track block further comprises a track header block for describing attributes of a corresponding track.

2. The method according to claim 1, wherein the track header block comprises disparity information of video samples corresponding to the corresponding track.

3. The method according to claim 2, wherein the disparity information comprises;
a disparity flag indicating whether 3-dimensional (3D) video samples are included in the corresponding track;
a flag of a plurality of regions indicating whether the 3D video samples are divided into a plurality of regions;
a disparity transition flag indicating that transition of at least one of disparity values occurs in the 3D video samples; or
a 2D transition flag indicating that transition of the 3D video samples occurs to 2D.

4. The method according to claim 3, wherein, when the disparity transition flag is set, the disparity information further comprises disparity related values that are supposed to be transited.

5. The method according to claim 1, further comprising:
generating signaling information of the presentation; and
separately transmitting the signaling information from the plurality of segments.

6. The method according to claim 5, wherein the signaling information is a media presentation descriptor, the media presentation descriptor comprises disparity information, and the disparity information comprises type information of at least one region set on the video samples or number information of the at least one region.

7. The method according to claim 6, wherein the disparity information comprises a disparity information set that is set for each of the at least one region.

8. A media content transmission apparatus comprising:
a media file generating unit configured to generate media files comprising information on presentation of media content, at least one of the media files comprising a movie block comprising metadata of presentation of the media file and at least one fragment, the movie block comprising at least one track block comprising metadata of a track included in the presentation, and the at least one fragment comprising a movie fragment block for providing metadata of presentation of a corresponding fragment and a media data block comprising video samples for presentation of the corresponding fragment;
a segment processing unit configured to process the media files into a plurality of segments; and
a transmitter configured to transmit the plurality of segments,
wherein the track block further comprises a track header block for describing attributes of a corresponding track.

9. The media content transmission apparatus according to claim 8, wherein the track header block comprises disparity information of video samples corresponding to the corresponding track.

10. The media content transmission apparatus according to claim 9, wherein the disparity information comprises;
a disparity flag indicating whether 3-dimensional (3D) video samples are included in the corresponding track;
a flag of a plurality of regions indicating whether the 3D video samples are divided into a plurality of regions;
a disparity transition flag indicating that transition of at least one of disparity values occurs in the 3D video samples; or
a 2D transition flag indicating that transition of the 3D video samples occurs to 2D.

11. The media content transmission apparatus according to claim 10, wherein, when the disparity transition flag is set, the disparity information further comprises disparity related values supposed to be transited.

12. The media content transmission apparatus according to claim 8, further comprising a signaling generating unit configured to generate signaling information of the presentation,
wherein the transmitter separately transmits the signaling information from the plurality of segments.

13. The media content transmission apparatus according to claim 12, wherein the signaling information is a media presentation descriptor, the media presentation descriptor comprises disparity information, and the disparity information comprises type information of at least one region set on the video samples or number information of the at least one region.

14. The media content transmission apparatus according to claim 13, wherein the disparity information comprises a disparity information set that is set for each of the at least one region.
